# EUROPEAN PATENT APPLICATION

(11) **EP 4 664 887 A1**
(43) Date of publication of application: **17.12.2025**
(21) Application number: 24766524.3
(22) Date of filing: 08.03.2024
(51) Int. Cl.: H04N 19/44, G06N 3/04

(54) **ENCODING AND DECODING METHOD AND APPARATUS, AND DEVICE THEREOF**

(30) Priority: 08.03.2023 CN 202310252984
(71) Applicant: Hangzhou Hikvision Digital Technology Co., Ltd., Hangzhou, Zhejiang 310051 (CN)
(72) Inventor: SUN, Yucheng, Hangzhou, Zhejiang 310051 (CN); SHE, Lei, Hangzhou, Zhejiang 310051 (CN); CHEN, Fangdong, Hangzhou, Zhejiang 310051 (CN); WANG, Li, Hangzhou, Zhejiang 310051 (CN); WU, Xiaoyang, Hangzhou, Zhejiang 310051 (CN)
(74) Representative: Michalski Hüttermann & Partner Patentanwälte mbB
(86) International application number: PCT/CN2024/080709
(87) International publication number: WO 2024/183810

(57) **Abstract**

The present disclosure provides a decoding method and apparatus, and a device thereof. The decoding method includes: decoding a bit stream corresponding to a current image block to obtain a reconstructed image block, where the reconstructed image block includes a first initial component and a second initial component, where the resolution of the first initial component is greater than or equal to the resolution of the second initial component; generating an adjusted component corresponding to the second initial component based on the first initial component and the second initial component; performing feature enhancement on the adjusted component to obtain a restored target component corresponding to the second initial component. By the technical solution of the present disclosure, decoding performance can be improved, and decoding complexity can be reduced.

## Description

### TECHNICAL FIELD

The present disclosure relates to the field of encoding and decoding technology, and in particular, to encoding and decoding methods and apparatuses, and devices thereof.

### BACKGROUND

To reduce storage, video pictures are encoded before transmission, and complete video encoding includes processes such as prediction, transform, quantization, entropy encoding, filtering, etc. The prediction process includes intra prediction and inter prediction. Inter prediction exploits a temporal correlation of a video to predict pixels of a current picture using pixels of an adjacent encoded picture, to remove temporal redundancy in the video. Intra prediction exploits a spatial correlation of a video to predict a current pixel using pixels of encoded blocks in a current frame picture, to remove spatial redundancy in the video.

With the rapid development of deep learning, deep learning has achieved success in many high-level computer vision problems, such as picture classification, object detection, etc. Deep learning is also gradually being applied in the field of encoding and decoding, that is, a neural network can be used to encode and decode pictures. Although encoding and decoding methods based on neural networks have shown great performance potential, the encoding and decoding methods based on neural networks still suffer from issues such as poor decoding performance, and high complexity.

### SUMMARY

In view of this, the present disclosure provides encoding and decoding methods and apparatuses, and devices thereof to improve decoding performance.

In the first aspect, the present disclosure provides a decoding method, including:
decoding a bitstream corresponding to a current picture block to obtain a reconstructed picture block, where the reconstructed picture block including a first initial component and a second initial component, where a resolution of the first initial component is greater than or equal to a resolution of the second initial component;
generating an adjusted component corresponding to the second initial component based on the first initial component and the second initial component; and
performing feature enhancement on the adjusted component, to obtain a restored target component corresponding to the second initial component.

In some embodiments, the reconstructed picture block is a reconstructed picture block in a YUV format, the first initial component is a luma component, and the second initial component is a chroma U component and a chroma V component.

In some embodiments, generating the adjusted component corresponding to the second initial component based on the first initial component and the second initial component includes:
obtaining a first picture feature corresponding to the first initial component, where the first picture feature includes a picture feature not processed by a neural network;
obtaining a second picture feature corresponding to the second initial component, where the second picture feature include a picture feature not processed by a neural network; and
generating the adjusted component based on the first picture feature and the second picture feature.

In some embodiments, the first picture feature includes a Haar wavelet frequency domain feature, and the second picture feature includes a Haar wavelet frequency domain feature.

In some embodiments, generating the adjusted component corresponding to the second initial component based on the first initial component and the second initial component includes:
performing one or more Haar wavelet transforms on the first initial component to obtain transformed frequency bands as a first feature map;
performing one or more Haar wavelet transforms on the second initial component to obtain transformed frequency bands as a second feature map; and
performing a concatenation operation on the first feature map and the second feature map, to obtain the adjusted component.

In some embodiments, performing the concatenation operation on the first feature map and the second feature map includes:
performing the concatenation operation on the first feature map and the second feature map along a channel dimension.

In some embodiments, performing one or more Haar wavelet transforms on the first initial component to obtain the transformed frequency bands includes: performing two Haar wavelet transforms on the first initial component to obtain the frequency bands after the two Haar wavelet transforms; and
performing one or more Haar wavelet transforms on the second initial component to obtain the transformed frequency bands includes: performing two Haar wavelet transforms on the second initial component to obtain the frequency bands after the two Haar wavelet transforms.

In some embodiments, performing the Haar wavelet transforms on the first initial component to obtain the transformed frequency bands includes: performing two Haar wavelet transforms on the first initial component to obtain the frequency bands after the two Haar wavelet transforms; and
performing the Haar wavelet transforms on the second initial component to obtain the transformed frequency bands includes: performing two Haar wavelet transforms on the second initial component to obtain the frequency bands after the two Haar wavelet transforms.

In some embodiments, performing the two Haar wavelet transforms on the first initial component to obtain the frequency bands after the two Haar wavelet transforms includes: performing a first Haar wavelet transform on the first initial component to obtain frequency bands after the first Haar wavelet transform; and performing a second Haar wavelet transform on the frequency bands after the first Haar wavelet transform to obtain the frequency bands after the two Haar wavelet transforms; and
performing the two Haar wavelet transforms on the second initial component to obtain the frequency bands after the two Haar wavelet transforms includes: performing a first Haar wavelet transform on the second initial component to obtain frequency bands after the first Haar wavelet transform; and performing a second Haar wavelet transform on the frequency bands after the first Haar wavelet transform to obtain the frequency bands after the two Haar wavelet transforms.

In some embodiments, performing feature enhancement on the adjusted component to obtain the restored target component corresponding to the second initial component includes:
performing feature enhancement on the adjusted component by a plurality of residual block networks, to obtain the target component.

In the second aspect, the present disclosure provides an encoding method, including:
encoding a first initial component and a second initial component of a current picture block, to obtain a bitstream corresponding to the current picture block, where a resolution of the first initial component is greater than or equal to a resolution of the second initial component.

In some embodiments, the current picture block is in a YUV format, the first initial component is a luma component, and the second initial component is a chroma U component and a chroma V component.

In the third aspect, the present disclosure provides a decoding apparatus, including:
a decoding module, configured to decode a bitstream corresponding to a current picture block to obtain a reconstructed picture block, where the reconstructed picture block including a first initial component and a second initial component, where a resolution of the first initial component is greater than or equal to a resolution of the second initial component;
a determining module, configured to generate an adjusted component corresponding to the second initial component based on the first initial component and the second initial component; and
a processing module, configured to perform feature enhancement on the adjusted component, to obtain a restored target component corresponding to the second initial component.

In the fourth aspect, the present disclosure provides an encoding apparatus, including:
an encoding module, configured to encode a first initial component and a second initial component of a current picture block, to obtain a bitstream corresponding to the current picture block, where a resolution of the first initial component is greater than or equal to a resolution of the second initial component.

In the fifth aspect, the present disclosure provides a decoding device including one or more processors and one or more machine-readable storage media, where the one or more machine-readable storage media store a machine executable instruction that can be executed by the one or more processors; and the one or more processors are configured to execute the machine executable instruction to implement the method according to any one of the embodiments in the first aspect.

In the sixth aspect, the present disclosure provides an encoding device including one or more processors and one or more machine-readable storage media, where the one or more machine-readable storage media store a machine executable instruction that can be executed by the one or more processors; and the one or more processors are configured to execute the machine executable instruction to implement the method according to any one of the embodiments in the second aspect.

In the seventh aspect, the present disclosure provides a machine-readable storage medium, which stores several computer instructions, and one or more processors execute the computer instructions to implement the method according to any one of the embodiments in the first aspect, or the method according to any one of the embodiments in the second aspect.

In the eighth aspect, the present disclosure provides a computer program product including a computer program, where one or more processors execute the computer program to implement the method according to any one of the embodiments in the first aspect, or the method according to any one of the embodiments in the second aspect.

From the above technical solutions, it can be seen that in the embodiments of the present disclosure, after the reconstructed picture block is decoded, where the reconstructed picture block includes a first initial component and a second initial component, and the resolution of the first initial component is greater than or equal to the resolution of the second initial component, based on the first initial component and the second initial component, an adjusted component corresponding to the second initial component is generated, that is, based on the first initial component, the second initial component is adjusted to obtain the adjusted component. Then, based on the adjusted component, the target component corresponding to the second initial component is determined, which can improve decoding performance, reduce decoding complexity, reduce computational complexity, and require less resources. The above algorithm can also be used for devices that are sensitive to cost and delay. A low-complexity and efficient post-processing network model framework is proposed to restore compression defects under various bit rates.

### BRIEF DESCRIPTION OF DRAWINGS

FIG. 1 is a schematic diagram of a three-dimensional feature matrix according to an embodiment of the present disclosure.
FIG. 2 is a flowchart of a decoding method according to an embodiment of the present disclosure.
FIG. 3 is a schematic diagram of a processing procedure of an encoding end according to an embodiment of the present disclosure.
FIG. 4 is a schematic diagram of a processing procedure of a decoding end according to an embodiment of the present disclosure.
FIG. 5A is a schematic structural diagram of end-to-end image compression according to an embodiment of the present disclosure.
FIG. 5B is a schematic structural diagram of a deep learning based post-processing according to an embodiment of the present disclosure.
FIGs. 6A-6I are schematic structural diagrams of post-processing networks according to embodiments of the present disclosure.
FIGs. 7A to 7C are schematic diagrams of upsampling according to embodiments of the present disclosure.
FIG. 7D is a schematic structural diagram of a post-processing network according to an embodiment of the present disclosure.
FIGs. 7E and 7F are schematic diagrams of feature enhancement according to embodiments of the present disclosure.
FIG. 8 is a hardware structure diagram of a decoding device according to an embodiment of the present disclosure.

### DETAILED DESCRIPTION

The terms used in the embodiments of the present disclosure are only for the purpose of describing specific embodiments and are not intended to limit the present disclosure. As used in the present disclosure and claims, the singular forms "a", "said", and "the" are intended to include the plural forms as well, unless the context clearly indicates otherwise. It should also be understood that the term "and/or" used in this disclosure refers to any or all possible combinations that include one or more associated listed items. It should be understood that although the terms first, second, third, etc. may be used to describe various information in the embodiments of the present disclosure, these terms should not be limited to them. These terms are only used to distinguish information of the same type from each other. For example, without departing from the scope of the present disclosure, the first information may also be referred to as the second information, and similarly, the second information may also be referred to as the first information, depending on the context. In addition, the word "if" used can be interpreted as "when", "upon", or "in response to a determination".

The embodiments of the present disclosure propose decoding methods, which may involve the following concepts.

JPEG (Joint Photographic Experts Group): JPEG is a standard for compressing continuous tone static pictures, with file suffixes of .jpg or .jpeg, and is a commonly used picture file format. JPEG adopts a joint coding method including predictive coding (such as Differential Pulse Code Modulation, DPCM), discrete cosine transform (DCT), and entropy coding, to remove redundant picture data and color data, which belongs to a lossy compression format, and can compress pictures in a small storage space, causing damage to picture data to a certain extent. Especially when using a too high compression ratio, it will reduce the quality of the restored picture after decompression. If high-quality pictures are desired, JPEG should not use a too high compression ratio.

JPEG-AI (Joint Photographic Experts Group Artificial Intelligence): The scope of JPEG-AI is to create learning-based image encoding standards that provide a single stream, compact compressed domain representation that significantly improves compression efficiency compared to commonly used image encoding standards under the same subjective quality, thereby effectively enhancing performance in image processing and computer vision tasks. JPEG-AI is oriented to a wide range of applications, such as cloud storage, visual management, autonomous vehicle and devices, image acquisition, storage and management, real-time management of visual data, and media distribution. The goal of JPEG-AI is to design an encoding and decoding solution that significantly improves compression efficiency with the same subjective quality, providing effective compression domain processing for machine-learning-based image processing and computer vision tasks. JPEG-AI requires hardware and software implementation-friendly encoding and decoding, support for 8-bit and 10-bit depths, and efficient encoding and progressive decoding of images using text and graphics.

Post Filter: the encoding end compresses the picture into a bitstream, and the decoding end decodes from the bitstream and reconstructs the picture. However, due to the encoding algorithm itself, after the picture is decoded from the bitstream and reconstructed, defects such as block effects, image artifacts, and color drift may occur. The purpose of post filter is to improve the defects caused by encoding compression of the picture, restore the picture data to the maximum extent, and enhance the subjective quality of the decoded reconstructed picture.

Image Super-Resolution: Super-Resolution mainly refers to the restoration of Low-Resolution pictures to High-Resolution pictures, and enhancing picture details and improving subjective picture quality. Image Super-Resolution is a technique used in computer vision image processing to enhance image resolution.

YUV Color Space: each pixel in a color picture can usually be described by several independent physical quantities, forming a spatial coordinate, which is the color space of the picture. The YUV color space is a color space in which the pixels of a color picture are described using three attributes: Y (luma), U (chroma), and V (chroma).

Entropy Encoding: Entropy encoding refers to the encoding process that follows the principle of entropy without losing any information. Information entropy is the average amount of information in the source (a measure of uncertainty). The encoding methods of entropy coding can include but are not limited to Shannon coding, Huffman coding, and arithmetic coding.

Neural Network (NN): A neural network refers to an artificial neural network, which is an operational model composed of a large number of interconnected nodes (or neurons). In neural networks, neuron processing units can represent different objects, such as features, letters, concepts, or some meaningful abstract patterns. The types of processing units in neural networks can be divided into three categories: input units, output units, and hidden units. The input unit receives signals and data from the external world; the output unit realizes the output of processing results; the hidden units are units that are located between input and output units and cannot be observed from outside the system. The connection weights between neurons reflect the strength of connections between units, and the representation and processing of information are reflected in the connection relationships between processing units. The neural network is a non-programmed, brain-like information processing method that essentially obtains a parallel distributed information processing function through the transform and dynamic behavior of the neural network, and imitates the information processing function of the nervous system of the human brain to different degrees and levels. In the field of video processing, a commonly used neural network can include but is not limited to: a Convolutional Neural Network (CNN), a Recurrent Neural Network (RNN), or a Fully Connected Network, etc.

Convolutional Neural Network (CNN): the convolutional neural network is a type of feedforward neural network and is one of the most representative network structures in deep learning technology. The artificial neurons of Convolutional Neural Network can respond to surrounding units within a certain coverage area, and have excellent performance in large-scale image processing. The basic structure of a convolutional neural network includes two layers, one of which is the feature extraction layer (also referred to as the convolutional layer), and the input of each neuron is connected to a local receptive field of the previous layer and extracts the local features. Once the local features are extracted, a positional relationship between the partial features and other features is also determined. The second layer is the feature mapping layer (also referred to as the activation layer), where each computational layer of the neural network consists of multiple feature maps. Each feature map is a plane, and the weights of all neurons on the plane are equal. The feature mapping structure can use Sigmoid function, ReLU function, Leaky-ReLU function, PReLU function, or GDN (Generalized Divisive Normalization) function, etc. as the activation function for the convolutional network. In addition, since neurons on one mapping surface share a weight, the number of free parameters in the network can be reduced.

For example, one of the advantages of the convolutional neural network over image processing algorithms is that the convolutional neural network avoids the complex pre-processing process (such as extracting artificial features) of the pictures, and can directly input the original picture for end-to-end learning. One of the advantages of the convolutional neural network compared to ordinary neural networks is that ordinary neural networks adopt a full connection approach, where all neurons from the input layer to the hidden layer are connected, which results in a huge number of parameters, makes network training time-consuming or even difficult. The convolutional neural network can avoid this difficulty through local connections, weight sharing, and other approaches.

Deconvolution: the deconvolutional layer, also referred to as transposed convolution layer, works similarly to convolution layer. The main difference is that the deconvolutional layer uses padding to make the output greater than the input (the output and the input can also be kept the same). If the stride is 1, it means that the output size is equal to the input size; and if the stride is N, it means that the width of the output feature is N times the width of the input feature, and the height of the output feature is N times the height of the input feature.

Generalization Ability: the generalization ability can refer to the adaptability of a machine learning algorithm to fresh samples. The purpose of learning is to learn the hidden patterns behind data pairs. For data outside the learning set that has the same pattern, the trained network can also provide appropriate outputs. This ability can be called generalization ability.

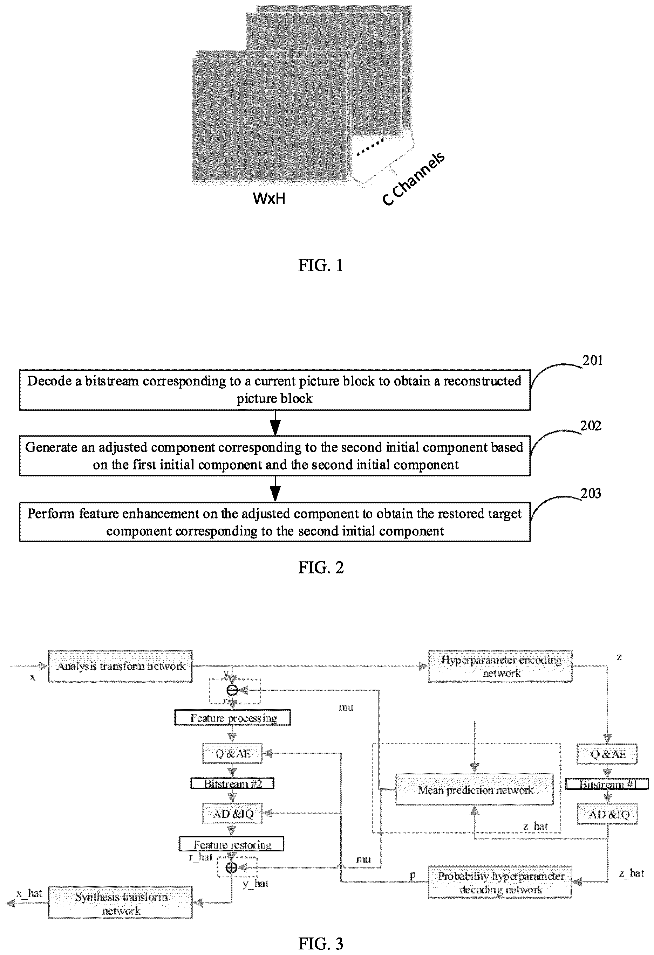

Feature: the feature referred to in the present disclosure is a three-dimensional feature matrix of C * W * H. As shown in FIG. 1, which is a schematic diagram of the three-dimensional feature matrix. In the three-dimensional feature matrix, C represents the number of channels, H represents the feature height, and W represents the feature width. The three-dimensional feature matrix can be the input or output of a neural network.

Rate-Distortion Optimized: there are two major indicators for evaluating encoding efficiency, code rate and Peak Signal to Noise Ratio (PSNR). The smaller the bitstream, the higher the compression rate, the higher the PSNR, and the better the quality of the reconstructed picture. In mode selection, the discrimination formula is essentially a comprehensive evaluation of the both. For example, the cost corresponding to a mode: J (mode)=D+λ * R, where D represents distortion, which can usually be measured using the SSE index. SSE refers to the mean square sum of the differences between the reconstructed picture block and the source picture. To realize cost consideration, the SAD index can also be used, where the SAD refers to the sum of the absolute differences between the reconstructed picture block and the source picture. λ represents the Lagrange multiplier, and R represents the actual number of bits required for picture block encoding in this mode, including the total number of bits required for encoding mode information, motion information, and residuals, etc. When selecting modes, using the Rate-Distortion Optimized to compare and make decisions on encoding modes can usually ensure the best encoding performance.

There are many encoding tools proposed for each module of the encoding end, and each tool usually has multiple modes. For different video sequences, the encoding tools that can implement optimal encoding performance are often different. Therefore, in the encoding process, Rate-Distortion Optimize (RDO) is usually used to compare the encoding performance of different tools or modes to select the best mode. After determining the optimal tool or mode, the decision information of the tool or mode is transmitted by encoding flag information in the bitstream. Although this approach brings high encoding complexity, it can adaptively select the optimal mode combination for different contents and implement the best encoding performance. The decoding end can obtain relevant mode information by directly parsing the flag information, with minimal complexity impact.

In end-to-end image compression techniques based on deep learning, the picture is converted into the YUV color space, and the UV chroma signal is down sampled by half. Then, the Y signal and UV signals are compressed and encoded separately. The decoding end decodes and reconstructs the Y signal and UV signals based on the bitstream data, to obtain the reconstructed Y signal and UV signals. Since the UV chroma signal is compressed and encoded after half down sampling, the resolution of the UV chroma signal is halved. Therefore, in the post-processing process, the resolution of the UV chroma signal can also be restored. However, this resolution restoration procedure has high computational complexity and resource requirements, and some cost sensitive and delay sensitive devices cannot restore the resolution of the UV chroma signal.

In response to the above findings, the embodiments propose a neural network-based method for removing compression defects. In the field of end-to-end image compression, a low complexity and efficient post-processing network model framework is proposed, which can enhance UV signals based on Y signals. This method has low complexity and high performance, and can restore compression defects at various bitrates.

The following provides a detailed explanation of the decoding method in the embodiments of the present disclosure, based on several embodiments.

Embodiment 1: a decoding method is proposed in the embodiments of the present disclosure, as shown in FIG. 2, which is a flowchart of the method. The method can be applied to the decoding end (also referred to as the video decoder), and can include steps 201 to 203.

In step 201, a bitstream corresponding to a current picture block is decoded to obtain a reconstructed picture block.

For example, the reconstructed picture block may include a first initial component and a second initial component, where the resolution of the second initial component is a down sampled resolution, and the resolution of the first initial component may be greater than or equal to the resolution of the second initial component. For example, the resolution of the first initial component can be the resolution (i.e., the original resolution) without downsampling or the resolution after downsampling, which is not limited, but the resolution of the first initial component is greater than or equal to the resolution of the second initial component.

For example, if the reconstructed picture block is in YUV format, the first initial component can be the luma component, and the second initial component can be the chroma U component and/or chroma V component. Alternatively, if the reconstructed picture block is in RGB format, the first initial component can be the G component, and the second initial component can be the R component and/or B component.

In step 202, an adjusted component corresponding to the second initial component is generated based on the first initial component and the second initial component. The reconstruction quality of the adjusted component may be better than the reconstruction quality of the second initial component, the reconstruction quality of the adjusted component may be equal to the reconstruction quality of the second initial component, and the reconstruction quality of the second initial component may also be better than the reconstruction quality of the adjusted component.

For example, the first picture feature corresponding to the first initial component can be obtained, where the first picture feature may include but is not limited to a picture feature not processed by a neural network and/or a picture feature obtained by a neural network; the second picture feature corresponding to the second initial component can be obtained, where the second picture feature may include but is not limited to a picture feature not processed by a neural network and/or a picture feature obtained by a neural network; and the adjusted component can be generated based on the first picture feature and the second picture feature.

For example, if the first picture feature includes a picture feature not processed by a neural network, the first picture feature may include but is not limited to at least one of the following: a texture feature, a subjective feature, a frequency domain feature, or a histogram feature; and if the second picture feature includes a picture feature not processed by a neural network, the second picture feature may include but is not limited to at least one of the following: a texture feature, a subjective feature, a frequency domain feature, or a histogram feature. The above are just a few examples, not limited to these.

When the first picture feature includes a first feature map processed by a neural network, and the second picture feature includes a second feature map processed by a neural network, generating the adjusted component corresponding to the second initial component based on the first initial component and the second initial component may include but is not limited to: inputting the first initial component to the first neural network to obtain the first feature map; inputting the second initial component to the second neural network to obtain the second feature map; adding the first feature map and the second feature map to obtain the adjusted component, or performing a concatenation operation on the first feature map and the second feature map to obtain the adjusted component.

For example, when the first picture feature includes a weight coefficient map obtained through a neural network, and the second picture feature includes a second feature map obtained through a neural network, generating the adjusted component corresponding to the second initial component based on the first initial component and the second initial component may include but is not limited to: inputting the first initial component to the first neural network to obtain the first feature map corresponding to the first initial component, and performing guided filtering on the first feature map to obtain a weight coefficient map; inputting the second initial component to the second neural network to obtain the second feature map; and generating the adjusted component based on the weight coefficient map and the second feature map.

For example, performing guided filtering on the first feature map to obtain the weight coefficient map can include but is not limited to: performing convolution on the first feature map to obtain a convolved feature map; and performing weight mapping on the convolved feature map to obtain the weight coefficient map.

For example, performing weight mapping on the convolved feature map to obtain the weight coefficient map includes but is not limited to: performing pooling on the convolved feature map to obtain the pooled feature map; performing full connection and ReLU (Rectified Linear Unit) activation on the pooled feature map, to obtain the ReLU activated feature map; performing full connection and sigmoid (S-shaped curve, i.e., S-shaped function) activation on the ReLU activated feature map to obtain the Sigmoid activated feature map; and generating the weight coefficient map based on the convolved feature map and the Sigmoid activated feature map, where the weight coefficient map is obtained by multiplying the convolved feature map and the Sigmoid activated feature map.

For example, performing weight mapping on the convolved feature map to obtain the weight coefficient map can include but is not limited to: performing convolution and Sigmoid activation on the convolved feature map to obtain the weight coefficient map.

For example, generating the adjusted component based on the weight coefficient map and the second feature map can include but is not limited to: multiplying the weight coefficient map and the second feature map to obtain the multiplied feature map; performing convolution on the first feature map to obtain the convolved feature map; adding the multiplied feature map and the convolved feature map to obtain the added feature map; and performing a concatenation operation on the added feature map and the convolved feature map to obtain the adjusted component.

For example, when the first picture feature includes K first feature maps that are processed through a neural network, and the second picture feature includes K+1 second feature maps that are processed through a neural network, generating the adjusted component corresponding to the second initial component based on the first initial component and the second initial component may include, but is not limited to: for the first first feature map and the first second feature map, inputting the first initial component to the neural network to obtain the first first feature map and inputting the second initial component to the neural network to obtain the first second feature map; for the i-th first feature map and i-th second feature map, where i is any integer greater than or equal to 2 and less than or equal to K, and K can be a positive integer greater than 1, inputting the (i-1)-th first feature map to the neural network to obtain the i-th first feature map; performing feature fusion on the (i-1)-th first feature map and the (i-1)-th second feature map to obtain a fused feature, and inputting the fused feature into a neural network to obtain the i-th second feature map; and after obtaining the last second feature map (i.e., the last second feature map among K+1 second feature maps), generating the adjusted component based on the last second feature map.

For example, performing feature fusion on the first feature map (such as the (i-1)-th first feature map) and the second feature map (such as the (i-1)-th second feature map) to obtain the fused feature may include but is not limited to: adding the first feature map and the second feature map to obtain the fused feature; or performing a concatenation operation on the first feature map and the second feature map to obtain the fused feature; or performing guided filtering on the first feature map to obtain the weight coefficient map corresponding to the first feature map, and generating the fused feature based on the weight coefficient map and the second feature map. The above are just a few examples, not limited to these.

For example, inputting the first initial component into the first neural network to obtain the first feature map may include but is not limited to: extracting picture features of M dimensions from the first initial component, where M is a positive integer; performing a concatenation operation on the picture features of M dimensions to obtain a concatenated multi-dimension feature; and inputting the multi-dimension feature into the first neural network to obtain the first feature map.

For example, picture features of M dimensions may include but are not limited to at least one of the following: picture features obtained by convolving the first initial component with a convolutional kernel, picture features obtained by performing cascaded convolution on the first initial component with two convolution kernels, first-order spatial domain features obtained by processing the first initial component with a Sobel operator, second-order spatial domain features obtained by processing the first initial component with a Laplacian operator, or frequency domain features obtained by Fourier transforming the first initial component. The above are just a few examples of picture features, not limited to these.

For example, inputting the first initial component into the first neural network to obtain the first feature map may include but is not limited to: performing wavelet transform on the first initial component to obtain multiple frequency bands after wavelet transform; inputting the multiple frequency bands or partial frequency bands in the multiple frequency bands into the first neural network to obtain the first feature map. Inputting the second initial component into the second neural network to obtain the second feature map may include but is not limited to: performing wavelet transform on the second initial component to obtain multiple frequency bands after wavelet transform; inputting the multiple frequency bands or partial frequency bands in the multiple frequency bands into the second neural network to obtain the second feature map.

When performing wavelet transform on the first initial component to obtain multiple frequency bands after wavelet transform, one wavelet transform can be performed on the first initial component to obtain multiple frequency bands after wavelet transform, or multiple wavelet transforms can be performed on the first initial component to obtain multiple frequency bands after wavelet transform. When performing multiple wavelet transforms on the first initial component, the first initial component is first subjected to wavelet transform to obtain multiple frequency bands after wavelet transform. Then, the target frequency bands (all or part of the multiple frequency bands) is selected from the multiple frequency bands and subjected to wavelet transform to obtain multiple frequency bands after wavelet transform, and so on, until the multiple wavelet transforms are completed to obtain multiple frequency bands after the multiple wavelet transforms. When performing wavelet transform on the second initial component to obtain multiple frequency bands after wavelet transform, one wavelet transform can be performed on the second initial component to obtain multiple frequency bands after wavelet transform, or multiple wavelet transforms can be performed on the second initial component to obtain multiple frequency bands after wavelet transform.

For example, before inputting the first initial component into the first neural network to obtain the first feature map, the first initial component can also be preprocessed to obtain the preprocessed first initial component, where the preprocessed first initial component is used as input to the first neural network to obtain the first feature map. Preprocessing the first initial component to obtain the preprocessed first initial component may include but is not limited to: performing edge enhancement on the first initial component to obtain an edge-enhanced picture feature; performing multi-dimension feature extraction on the edge-enhanced picture feature to obtain a multi-dimension feature; and determining the preprocessed first initial component based on the multi-dimension feature, for example, the multi-dimension feature is determined as the preprocessed first initial component.

For example, performing multi-dimension feature extraction on the edge-enhanced picture feature to obtain the multi-dimension feature may include but is not limited to: performing convolution on the edge-enhanced picture feature to obtain a convolved feature; performing downsampling on the convolved feature to obtain a downsampled feature; performing channel transform on the downsampled feature to obtain the channel transformed feature; performing upsampling on the channel transformed feature to obtain the upsampled feature; and generating the multi-dimension feature based on the upsampled feature and the channel transformed feature. Then, the multi-dimension feature is inputted as the preprocessed first initial component to the first neural network.

In step 203, feature enhancement is performed on the adjusted component to obtain the restored target component corresponding to the second initial component.

In an embodiment, before generating the adjusted component corresponding to the second initial component based on the first initial component and the second initial component, the second initial component can also be upsampled to obtain the upsampled second initial component. Where the resolution of the upsampled second initial component can be equal to the resolution of the first initial component.

In another embodiment, before performing feature enhancement on the adjusted component to obtain the restored target component corresponding to the second initial component (i.e., before step 203), the adjusted component can also be upsampled to obtain the upsampled adjusted component. Where the resolution of the upsampled adjusted component can be equal to the resolution of the first initial component.

In another embodiment, after performing feature enhancement on the adjusted component to obtain the restored target component corresponding to the second initial component (i.e., after step 203), the target component can also be upsampled to obtain the upsampled target component. Where the resolution of the upsampled target component can be equal to the resolution of the first initial component.

For example, performing feature enhancement on the adjusted component to obtain the restored target component corresponding to the second initial component may include but is not limited to: performing feature enhancement on the adjusted component by at least one residual block network to obtain the target component corresponding to the second initial component; or performing feature enhancement on the adjusted component by the U-Net network (an Encoder-Decoder structured network, the first half is for feature extraction and the second half is for upsampling) to obtain the target component corresponding to the second initial component.

As an example, the above execution order is only for the convenience of describing the given examples. In practical applications, the execution order between steps can also be changed without limitation. Moreover, in other embodiments, the steps of the corresponding method can not necessarily be executed in the order shown and described in the present disclosure, and the steps included in the method can be more or less than those described in the present disclosure. In addition, the single step described in the present disclosure can be decomposed into multiple steps for description in other embodiments. The multiple steps described in the present disclosure can also be combined into a single step for description in other embodiments.

From the above technical solutions, it can be seen that in the embodiments of the present disclosure, after the reconstructed picture block is decoded, where the reconstructed picture block includes a first initial component and a second initial component, the resolution of the second initial component is a down sampled resolution, and the resolution of the first initial component is greater than or equal to the resolution of the second initial component, based on the first initial component and the second initial component, an adjusted component corresponding to the second initial component is generated, that is, based on the first initial component, the second initial component is adjusted to obtain the adjusted component. Then, based on the adjusted component, the target component corresponding to the second initial component is determined, which can improve decoding performance, reduce decoding complexity, reduce computational complexity, and require less resources. The above algorithm can also be used for devices that are sensitive to cost and delay. A low-complexity and efficient post-processing network model framework is proposed to restore compression defects under various bit rates.

Embodiment 2: regarding the processing procedure of the encoding end (also known as the video encoder), referring to FIG. 3. FIG. 3 is only an example of the processing process of the encoding end and does not limit the processing procedure of the encoding end.

After obtaining the current picture block x (where the current picture block x can be the original picture block x, i.e., the input picture block), the encoding end can analyze and transform the current picture block x through an analysis transform network (i.e., a neural network) to obtain the picture feature y corresponding to the current picture block x. Where performing feature transform on the current picture block x by the analysis transform network refers to: transforming the current picture block x to a picture feature y in a latent domain, thereby facilitating all subsequent processes to operate in the latent domain.

A picture can be divided into one picture block or multiple picture blocks. If the picture is divided into one picture block, the current picture block x can also be a picture, which means that the encoding and decoding process for the picture block can be directly applied to the picture.

After obtaining the picture feature y, the encoding end performs coefficient hyperparameter feature transform on the picture feature y to obtain the coefficient hyperparameter feature z. For example, the picture feature y can be input to a hyperparameter encoding network (i.e., a neural network), where the hyperparameter encoding network performs coefficient hyperparameter feature transform on the picture feature y to obtain the coefficient hyperparameter feature z. Where the hyperparameter encoding network can be a trained neural network. The training process of the hyperparameter encoding network is not limited, as long as the trained hyperparameter encoding network can perform the coefficient hyperparameter feature transform on the picture feature y. Where the picture feature y in the latent domain is processed by a hyperparameter encoding network to obtain hyper prior latent information z.

After obtaining the coefficient hyperparameter feature z, the encoding end can quantize the coefficient hyperparameter feature z to obtain the hyperparameter quantized feature corresponding to the coefficient hyperparameter feature z, where the Q operation in FIG. 3 represents the quantization process. After the hyperparameter quantized feature corresponding to the coefficient hyperparameter feature z is obtained, the hyperparameter quantized feature is encoded to obtain the Bitstream#1 (i.e., the first bitstream) corresponding to the current picture block. The AE operation in FIG. 3 represents the encoding process, such as entropy encoding. Alternatively, the encoding end can directly encode the coefficient hyperparameter feature z to obtain the Bitstream#1 corresponding to the current picture block. Where the hyperparameter quantized feature or coefficient hyperparameter feature z carried in Bitstream#1 is mainly used to obtain the parameter of the mean and probability distribution model.

After obtaining the Bitstream#1 corresponding to the current picture block, the encoding end can transmit the Bitstream#1 corresponding to the current picture block to the decoding end. The processing procedure of the decoding end for the Bitstream#1 corresponding to the current picture block is referred to the subsequent embodiments.

After obtaining the Bitstream#1 corresponding to the current picture block, the encoding end can also decode Bitstream#1 to obtain hyperparameter quantized feature. AD in FIG. 3 represents the decoding process. Then, the hyperparameter quantized feature are inverse quantized to obtain the coefficient hyperparameter feature z_hat, where the coefficient hyperparameter feature z_hat can be the same or different from the coefficient hyperparameter feature z. The IQ operation in FIG. 3 represents the inverse quantization process. Alternatively, after obtaining the Bitstream#1 corresponding to the current picture block, the encoding end can also decode Bitstream#1 to obtain the coefficient hyperparameter feature z_hat, without involving the inverse quantization process of the coefficient hyperparameter feature z_hat.

For the encoding process of Bitstream#1, an encoding method with a fixed probability density model can be used, and for the decoding process of Bitstream#1, a decoding method with a fixed probability density model can be used, which is not limited.

After obtaining the coefficient hyperparameter feature z_hat, the encoding end can perform context-based prediction based on the coefficient hyperparameter feature z_hat of the current picture block and the residual feature y_hat of the previous picture block (the determination process of residual feature y_hat is described in the subsequent embodiments), to obtain the predicted value mu (i.e., mean mu) corresponding to the current picture block. For example, the coefficient hyperparameter feature z_hat and residual feature y_hat are input to the mean prediction network, and the mean prediction network determines the predicted value mu based on the coefficient hyperparameter feature z_hat and residual feature y_hat. This prediction process is not limited. Where for the context-based prediction process, the input includes the coefficient hyperparameter feature z_hat and the decoded residual feature y_hat, where the initial coefficient hyperparameter feature z_hat and the decoded residual feature y_hat are jointly input to obtain a more accurate predicted value mu. The predicted value mu is used to be subtracted from the original feature to obtain the residual and to be added to the decoded residual to obtain the reconstructed y.

It should be noted that the mean prediction network is an optional neural network. That is, the mean prediction network can be omit, which means there is no need to determine the predicted value mu through the mean prediction network. The dashed box in FIG. 3 indicates that the mean prediction network is optional.

After obtaining the picture feature y, the encoding end can determine the residual feature r based on the picture feature y and the predicted value mu, such as taking the difference between the picture feature y and the predicted value mu as the residual feature r. Then, the residual feature r is subjected to feature processing to obtain the picture feature s. The feature processing process is not limited and can be any feature processing method. In this case, it is necessary to deploy a mean prediction network to provide the predicted value mu. Alternatively, after obtaining the picture feature y, the encoding end can perform feature processing on the picture feature y to obtain the picture feature s. The feature processing process is not limited and can be any feature processing method. In this case, there is no need to deploy a mean prediction network, and the residual process is represented by a dashed box as an optional process.

After obtaining the picture feature s, the encoding end can quantize the picture feature s to obtain the corresponding picture quantized feature. The Q operation in FIG. 3 represents the quantization process. After obtaining the picture quantized feature corresponding to the picture feature s, the encoding end can encode the picture quantized feature to obtain the Bitstream#2 (i.e., the second bitstream) corresponding to the current picture block. The AE operation in FIG. 3 represents the encoding process, such as the entropy encoding process. Alternatively, the encoding end can directly encode the picture feature s to obtain the Bitstream#2 corresponding to the current picture block, without involving the quantization process of the picture feature s.

After obtaining the Bitstream#2 corresponding to the current picture block, the encoding end can transmit the Bitstream#2 corresponding to the current picture block to the decoding end. The processing procedure of the decoding end for the Bitstream#2 corresponding to the current picture block is referred to the subsequent embodiments.

After obtaining the Bitstream#2 corresponding to the current picture block, the encoding end can further decode Bitstream#2 to obtain the picture quantized feature. The AD in FIG. 3 represents the decoding process. Then, the encoding end can perform inverse quantization on the picture quantized feature to obtain picture features s', where the picture feature s' can be the same or different from the picture feature s. The IQ operation in FIG. 3 represents the inverse quantization process. Alternatively, after obtaining the Bitstream#2 corresponding to the current picture block, the encoding end can further decode Bitstream#2 to obtain picture features s', without involving the inverse quantization process of picture quantized feature.

After obtaining the picture feature s', the encoding end can perform feature recovery (i.e., the inverse process of the feature processing) on the picture feature s', to obtain the residual feature r_hat. There are no restrictions on this feature recovery process, and any feature recovery method can be used. The residual feature r_hat can be the same or different from the residual feature r. After obtaining the residual feature r_hat, the encoding end determines the picture feature y_hat based on the residual feature r_hat and the predicted value mu. The picture feature y_hat and the picture feature y can be the same or different. For example, the sum of the residual feature r_hat and the predicted value mu is taken as the picture feature y_hat. In this case, it is necessary to deploy a mean prediction network to provide the predicted value mu. Alternatively, after obtaining the picture feature s', the encoding end can perform feature recovery (i.e., the inverse process of the feature processing) on the picture feature s' to obtain the picture feature y_hat, where the picture feature y_hat can be the same or different from the picture feature y. In this case, there is no need to deploy a mean prediction network, and the residual process is represented by a dashed box as an optional process.

After obtaining the picture feature y_hat, the encoding end can perform a synthesis transform on the picture feature y_hat to obtain the reconstructed picture block x_hat corresponding to the current picture block x. For example, the picture feature y_hat is input to the synthesis transform network, where the synthesis transform network synthesizes and transforms the picture feature y_hat to obtain the reconstructed picture block x_hat. Then, the picture reconstruction process is completed.

In an embodiment, when encoding the picture quantized feature or the picture feature s to obtain the Bitstream#2 corresponding to the current picture block, the encoding end needs to first determine a probability distribution model, and then encode the picture quantized feature or picture feature s based on the probability distribution model. In addition, when decoding Bitstream#2, the encoding end also needs to first determine the probability distribution model, and then decode Bitstream#2 based on the probability distribution model.

To obtain the probability distribution model, as shown in FIG. 3, after obtaining the coefficient hyperparameter feature z_hat, the encoding end can perform coefficient hyperparameter feature inverse transform on the coefficient hyperparameter feature z_hat, to obtain the probability distribution parameter p. For example, the coefficient hyperparameter feature z_hat is input to the probability hyperparameter decoding network, where the probability hyperparameter decoding network performs coefficient hyperparameter feature inverse transform on the coefficient hyperparameter feature z_hat to obtain the probability distribution parameter p. After obtaining the probability distribution parameter p, the encoding end can generate a probability distribution model based on the probability distribution parameter p. The probability hyperparameter decoding network can be a trained neural network. The training process of the probability hyperparameter decoding network is not limited, as long as the probability hyperparameter decoding network can perform coefficient hyperparameter feature inverse transform on the coefficient hyperparameter feature z_hat.

In an embodiment, the processing of the encoding end described above is performed by a deep learning model or a neural network model, thereby achieving end-to-end picture compression and encoding processes, which is not limited.

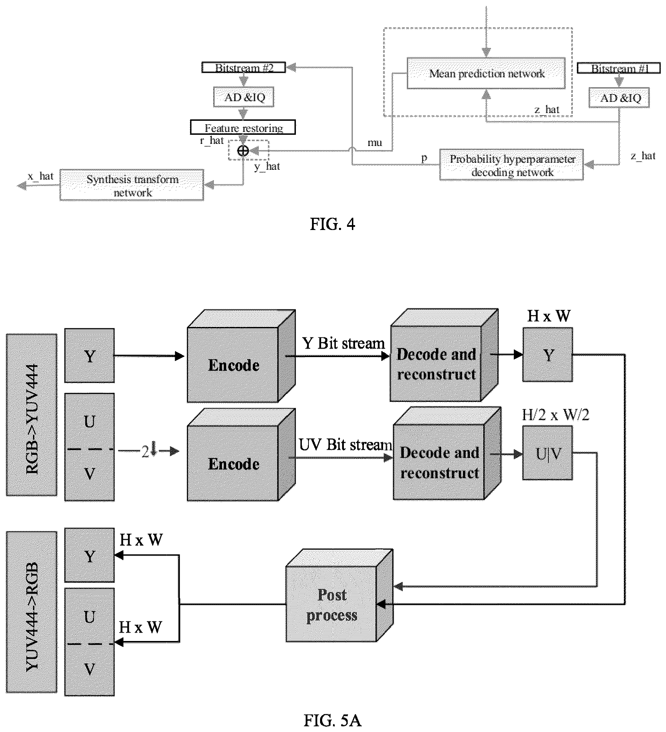

Embodiment 3: regarding the processing procedure of the decoding end (also known as the video decoder), referring to FIG. 4. FIG. 4 is only an example of the processing procedure of the decoding end and does not limit the processing procedure of the decoding end.

After obtaining the Bitstream#1 corresponding to the current picture block, the decoding end can also decode Bitstream#1 to obtain hyperparameter quantized feature. AD in FIG. 4 represents the decoding process. Then, the hyperparameter quantized feature are inverse quantized to obtain the coefficient hyperparameter feature z_hat, where the coefficient hyperparameter feature z_hat can be the same or different from the coefficient hyperparameter feature z. The IQ operation in FIG. 4 represents the inverse quantization process. Alternatively, after obtaining the Bitstream#1 corresponding to the current picture block, the decoding end can also decode Bitstream#1 to obtain the coefficient hyperparameter feature z_hat, without involving the inverse quantization process of the coefficient hyperparameter feature z_hat.

For the decoding process of Bitstream#1, a decoding method with a fixed probability density model can be used, which is not limited.

A picture can be divided into one picture block or multiple picture blocks. If the picture is divided into one picture block, the current picture block x can also be a picture, which means that the decoding process for the picture block can be directly applied to the picture.

After obtaining the coefficient hyperparameter feature z_hat, the decoding end can perform context-based prediction based on the coefficient hyperparameter feature z_hat of the current picture block and the residual feature y_hat of the previous picture block (the determination process of residual feature y_hat is described in the subsequent embodiments), to obtain the predicted value mu (i.e., mean mu) corresponding to the current picture block. For example, the coefficient hyperparameter feature z_hat and residual feature y_hat are input to the mean prediction network, and the mean prediction network determines the predicted value mu based on the coefficient hyperparameter feature z_hat and residual feature y_hat. This prediction process is not limited. Where for the context-based prediction process, the input includes the coefficient hyperparameter feature z_hat and the decoded residual feature y_hat, where the initial coefficient hyperparameter feature z_hat and the decoded residual feature y_hat are jointly input to obtain a more accurate predicted value mu.

It should be noted that the mean prediction network is an optional neural network. That is, the mean prediction network can be omit, which means there is no need to determine the predicted value mu through the mean prediction network. The dashed box in FIG. 4 indicates that the mean prediction network is optional.

After obtaining the Bitstream#2 corresponding to the current picture block, the decoding end can further decode Bitstream#2 to obtain the picture quantized feature. The AD in FIG. 4 represents the decoding process. Then, the decoding end can perform inverse quantization on the picture quantized feature to obtain picture features s', where the picture feature s' can be the same or different from the picture feature s. The IQ operation in FIG. 4 represents the inverse quantization process. Alternatively, after obtaining the Bitstream#2 corresponding to the current picture block, the decoding end can further decode Bitstream#2 to obtain picture features s', without involving the inverse quantization process of picture quantized feature.

After obtaining the picture feature s', the decoding end can perform feature recovery (i.e., the inverse process of the feature processing) on the picture feature s' to obtain the residual feature r_hat, where the residual feature r_hat is the same or different from the residual feature r. After obtaining the residual feature r_hat, the decoding end determines the picture feature y_hat based on the residual feature r_hat and the predicted value mu. The picture feature y_hat and the picture feature y are the same or different. For example, the sum of the residual feature r_hat and the predicted value mu is taken as the picture feature y_hat. In this case, it is necessary to deploy a mean prediction network to provide the predicted value mu. Alternatively, after obtaining the picture feature s', the decoding end can perform feature recovery on the picture feature s' to obtain the picture feature y_hat, where the picture feature y_hat can be the same or different from the picture feature y. In this case, there is no need to deploy a mean prediction network, and the residual process is represented by a dashed box as an optional process.

After obtaining the picture feature y_hat, the decoding end can perform a synthesis transform on the picture feature y_hat to obtain the reconstructed picture block x_hat corresponding to the current picture block x. For example, the picture feature y_hat is input to the synthesis transform network, where the synthesis transform network synthesizes and transforms the picture feature y_hat to obtain the reconstructed picture block x_hat. Then, the picture reconstruction process is completed.

In an embodiment, when decoding Bitstream#2, the decoding end needs to first determine the probability distribution model, and then decode Bitstream#2 based on the probability distribution model. To obtain the probability distribution model, as shown in FIG. 4, after obtaining the coefficient hyperparameter feature z_hat, the decoding end can perform coefficient hyperparameter feature inverse transform on the coefficient hyperparameter feature z_hat, to obtain the probability distribution parameter p. For example, the coefficient hyperparameter feature z_hat is input to the probability hyperparameter decoding network, where the probability hyperparameter decoding network performs coefficient hyperparameter feature inverse transform on the coefficient hyperparameter feature z_hat to obtain the probability distribution parameter p. After obtaining the probability distribution parameter p, the encoding end can generate a probability distribution model based on the probability distribution parameter p. The probability hyperparameter decoding network can be a trained neural network. The training process of the probability hyperparameter decoding network is not limited, as long as the probability hyperparameter decoding network can perform coefficient hyperparameter feature inverse transform on the coefficient hyperparameter feature z_hat to obtain the probability distribution apparatus p.

In an embodiment, the processing of the decoding end described above is performed by a deep learning model or a neural network model, thereby achieving end-to-end picture compression and encoding processes, which is not limited.

Embodiment 4: as shown in FIG. 5A, which is a schematic structural diagram of end-to-end image compression based on deep learning. At the encoding end, the picture is converted to YUV color space and the UV signals is down sampled by half. Then, the Y signal and UV signals are compressed and encoded separately, and the Y signal bitstream and UV signals bitstream are transmitted to the decoding end. At the decoding end, the Y signal bitstream is decoded and reconstructed to obtain the reconstructed Y signal, and the UV signals bitstream is decoded and reconstructed to obtain the reconstructed UV signals. Since the UV signals is compressed and encoded after half down sampling, i.e., the resolution of the UV signals is halved, the resolution of the reconstructed UV signals is halved. That is, the resolution of the reconstructed Y signal is H * W, and the resolution of the reconstructed UV signals is H/2 * W/2, i.e., the resolution of the reconstructed UV signals is half of the resolution of the reconstructed Y signal.

Since the resolution of the reconstructed UV signals is half of the resolution of the reconstructed Y signal, the resolution of the UV signals can be restored to H * W during post-processing. When restoring the resolution of the UV signals, the computational complexity of the resolution restoration procedure is high, and the resource requirements are relatively high. Some devices that are sensitive to cost and delay cannot restore the resolution of the UV chroma signal.

In response to the above findings, in the embodiments of the present disclosure, a low complexity and efficient post-processing method is proposed in the field of end-to-end image compression. During the post-processing process, the UV signals can be enhanced based on the Y signal. This method has low complexity and high performance, which can improve decoding performance, reduce decoding complexity, and reduce computational complexity. This method requires less resources and can also be used for cost and delay sensitive devices to restore compression defects at various bitrates.

In the embodiments of the present disclosure, after receiving the bitstream corresponding to the current picture block, the decoding end can decode the bitstream corresponding to the current picture block to obtain a reconstructed picture block. For example, the decoding end can use the processing flow of Embodiment 3 to decode the bitstream corresponding to the current picture block to obtain the reconstructed picture block, and the decoding process of the reconstructed picture block is not limited.

After obtaining the reconstructed picture block, if the reconstructed picture block is in YUV format, auxiliary enhancement can be performed on the chroma U component (i.e., U component) based on the luma component (i.e., Y component), auxiliary enhancement can be performed on the chroma V component (i.e., V component) based on the Y component, or auxiliary enhancement can be performed on both U and V components based on the Y component. If the reconstructed picture block is in RGB format, auxiliary enhancement can be performed on the R component based on the G component, auxiliary enhancement can be performed on the B component based on the G component, or auxiliary enhancement can be performed on both the R and B components based on the G component. For the convenience of description, in this embodiment, the reconstructed picture block in YUV format is taken as an example for explanation. Therefore, the reconstructed picture block can include Y component, U component, and V component. The resolution of Y component can be greater than that of U component. For example, the resolution of U component is the resolution without downsampling, and the resolution of Y component can be the original resolution or the resolution after downsampling, but the resolution of Y component is greater than the resolution of U component. The resolution of the Y component can be greater than the resolution of the V component. For example, the resolution of the V component is the resolution without downsampling, the resolution of the Y component can be the original resolution or the resolution after downsampling, but the resolution of the Y component is greater than the resolution of the V component. For example, assume that the resolution of the Y component is H * W, the resolution of the U component is H/2 * W/2, and the resolution of the V component is H/2 * W/2.

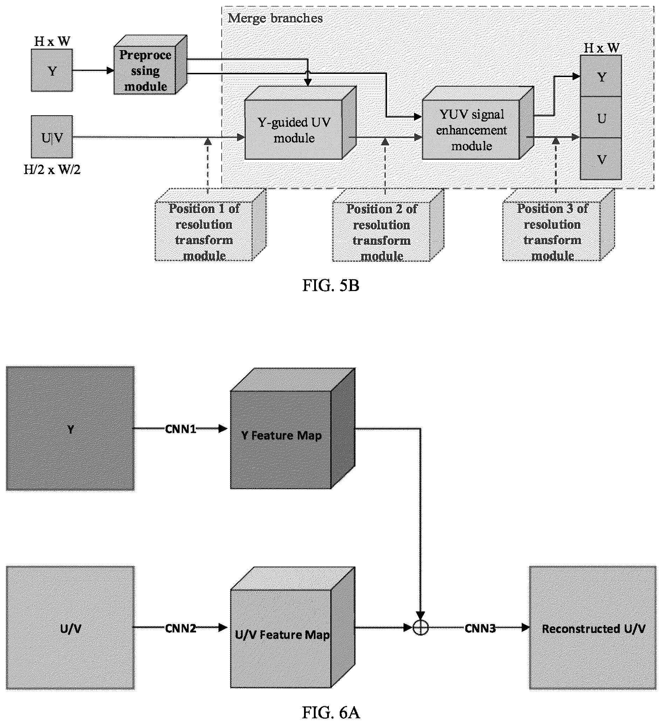

As shown in FIG. 5B, which is a schematic structural diagram of deep learning based post-processing. The decoding end can decode the bitstream corresponding to the current picture block to obtain a reconstructed picture block. If the reconstructed picture block is in YUV format, the reconstructed picture block can include Y component, U component, and V component. The Y component is referred to as the initial Y component (i.e., the first initial component of the above embodiment), the U component is referred to as the initial U component (i.e., the second initial component of the above embodiment), and the V component is referred to as the initial V component (i.e., the second initial component of the above embodiment). Based on this, auxiliary enhancement can be performed on the initial U component by the initial Y component, auxiliary enhancement can be performed on the initial V component by the initial Y component, or auxiliary enhancement can be performed on the initial U component and the initial V component by the initial Y component. Where the resolution of the initial Y component can be greater than the resolution of the initial U component, and the resolution of the initial Y component can be greater than the resolution of the initial V component. For example, as shown in FIG. 5B, the resolution of the initial Y component is H * W, the resolution of the initial U component is H/2 * W/2, and the resolution of the initial V component is H/2 * W/2.

In this embodiment, as shown in FIG. 5B, a preprocessing module is involved. The preprocessing module is an optional module. After decoding the initial Y component, if the preprocessing module is deployed, the initial Y component can be preprocessed by the preprocessing module to obtain the preprocessed initial Y component, and the preprocessed initial Y component is then input to the Y-guided UV module and YUV signal enhancement module. If the preprocessing module is not deployed, the initial Y component is directly input to the Y-guided UV module and YUV signal enhancement module. In the subsequent embodiments, the initial Y component obtained by the Y-guided UV module and YUV signal enhancement module can be the preprocessed initial Y component or the decoded original initial Y component, which is not limited.

Due to the correlation between the three YUV components, although the compression loss of the Y component by the encoding end is less than the compression loss of the U/V component, the Y component can also be enhanced to better enhance the U/V component. Therefore, the initial Y component can be preprocessed through a preprocessing module to perform feature enhancement on the initial Y component.

In this embodiment, as shown in FIG. 5B, the Y-guided UV module is involved. After decoding the initial Y component, initial U component, and initial V component, the initial U component and initial V component suffer more losses, and the initial Y component retains relatively more picture detail information. Moreover, there is a certain correlation between the initial U and V components and the initial Y component. Therefore, fully utilizing the information of the initial Y component can help improve the reconstruction quality of the initial U component and initial V component.

Based on this, the Y-guided UV module can use the information of the initial Y component to assist in improving the reconstruction quality of the initial U component, use the information of the initial Y component to assist in improving the reconstruction quality of the initial V component, and use the information of the initial Y component to assist in improving the reconstruction quality of the initial U component and the initial V component.

In this embodiment, as shown in FIG. 5B, the resolution transform module is involved. Since the resolution of the initial U component is less than the resolution of the initial Y component. If the resolution of the initial U component is the resolution after 2 times downsampling, the resolution of the initial U component is half of the original signal resolution, such as H/2*W/2. Therefore, the resolution transform module upsamples the resolution of the initial U component to restore the U component with the original signal resolution, i.e., upsamples the resolution of the initial U component to obtain a U component with a resolution of H*W. Since the resolution of the initial V component is less than the resolution of the initial Y component. If the resolution of the initial V component is the resolution after 2 times downsampling, the resolution of the initial V component is half of the original signal resolution, such as H/2*W/2. Therefore, the resolution transform module upsamples the resolution of the initial V component to restore the V component with the original signal resolution, i.e., upsamples the resolution of the initial V component to obtain a V component with a resolution of H*W.

The position of the resolution transform module can be position 1, that is, the resolution transform module upsamples the resolution of the initial U component to obtain a U component with a resolution of H * W. The U component with the resolution of H * W is input to the Y-guided UV module. The resolution transform module upsamples the resolution of the initial V component to obtain a V component with a resolution of H * W. The V component with the resolution of H * W is input to the Y-guided UV module. Alternatively, the position of the resolution transform module can be position 2, that is, the resolution transform module upsamples the resolution of the U component output by the Y-guided UV module to obtain a U component with a resolution of H * W. The U component with the resolution of H * W is input to the YUV signal enhancement module. The resolution transform module upsamples the resolution of the V component output by the Y-guided UV module to obtain a V component with a resolution of H * W. The V component with the resolution of H * W is input to the YUV signal enhancement module. Alternatively, the position of the resolution transform module can be position 3, where the resolution transform module upsamples the resolution of the U component output by the YUV signal enhancement module to obtain a U component with a resolution of H * W, and finally outputs this H * W U component. The resolution transform module upsamples the resolution of the V component output by the YUV signal enhancement module to obtain a V component with a resolution of H * W, and finally outputs this H * W V component.

For the resolution transform module, on the one hand, the resolution transform module can appropriately reduce the resolution of the feature map, thereby effectively reducing the computational complexity of the network. On the other hand, in the JPEG-AI framework, the resolution transform module is configured to upsample the resolutions of the reconstructed U/V component, thereby restoring a reconstructed U/V signal with the same resolution as the original signal.

In this embodiment, as shown in FIG. 5B, the YUV signal enhancement module is involved. In the image encoding and compression process, in addition to reducing the resolution of the UV signals, the compression algorithm and convolution process will cause additional information loss to the YUV signals. Therefore, the Y component can be enhanced by the YUV signal enhancement module to make the reconstructed Y component close to the original signal before compression, to improve subjective quality. The U component can be enhanced by the YUV signal enhancement module to make the reconstructed U component close to the original signal before compression, to improve subjective quality. The V component can be enhanced by the YUV signal enhancement module to make the reconstructed V component close to the original signal before compression, to improve subjective quality.

For example, as shown in FIG. 5B, three network branches (processing Y, U, and V components respectively) can be merged into one network branch, that is, a single network can be used to simultaneously process Y, U, and V components, and output reconstructed Y, U, and V components, thereby reducing network computational complexity.

Embodiment 5: in Embodiment 4, the Y-guided UV module can use the information of the initial Y component to assist in improving the reconstruction quality of the initial U component and/or the initial V component. For example, based on the initial Y component and the initial U component, an adjusted component corresponding to the initial U component is generated, and/or based on the initial Y component and the initial V component, an adjusted component corresponding to the initial V component is generated. Where the reconstruction quality of the adjusted component corresponding to the initial U component may be better than the reconstruction quality of the initial U component, thereby improving the reconstruction quality of the initial U component. The reconstruction quality of the adjusted component corresponding to the initial U component may also be equal to or lower than the reconstruction quality of the initial U component, which is not limited. The reconstruction quality of the adjusted component corresponding to the initial V component can be better than the reconstruction quality of the initial V component, thereby improving the reconstruction quality of the initial V component. The reconstruction quality of the adjusted component corresponding to the initial V component may also be equal to or lower than the reconstruction quality of the initial V component, which is not limited.

In an embodiment, the Y-guided UV module can obtain the first picture feature corresponding to the initial Y component, where the first picture feature can be a picture feature that has not been processed by a neural network. For example, the first picture feature can include but is not limited to at least one of the following: texture feature, subjective feature, frequency domain feature, or histogram feature. The Y-guided UV module can obtain the second picture feature corresponding to the initial U component, where the second picture feature can be a picture feature that has not been processed by a neural network. For example, the second picture feature can include but is not limited to at least one of the following: texture feature, subjective feature, frequency domain feature, or histogram feature. The Y-guided UV module can generate adjusted component based on the first picture feature and the second picture feature. For example, a texture fusion feature can be generated based on the texture feature corresponding to the initial Y component and the texture feature corresponding to the initial U component, and the texture fusion feature can be used to replace the texture feature corresponding to the initial U component to obtain the adjusted component corresponding to the initial U component. For example, a subjective fusion feature can be generated based on the subjective feature corresponding to the initial Y component and the subjective feature corresponding to the initial U component, and the subjective fusion feature can be used to replace the subjective feature corresponding to the initial U component, obtaining the adjusted component corresponding to the initial U component. For example, a frequency domain fusion feature can be generated based on the frequency domain feature corresponding to the initial Y component and the frequency domain feature corresponding to the initial U component, and the frequency domain fusion feature can be used to replace the frequency domain feature corresponding to the initial U component to obtain the adjusted component corresponding to the initial U component. For example, a histogram fusion feature can be generated based on the histogram feature corresponding to the initial Y component and the histogram feature corresponding to the initial U component, and the histogram fusion feature can be used to replace the histogram feature corresponding to the initial U component, to obtain the adjusted component corresponding to the initial U component. For example, a texture fusion feature can be generated based on the texture feature corresponding to the initial Y component and the texture feature corresponding to the initial U component, and a frequency domain fusion feature can be generated based on the frequency domain feature corresponding to the initial Y component and the frequency domain feature corresponding to the initial U component. The texture fusion feature can be used to replace the texture feature corresponding to the initial U component, and the frequency domain fusion feature can be used to replace the frequency domain feature corresponding to the initial U component to obtain the adjusted component corresponding to the initial U component. The above are just a few examples, not limited to these.

The Y-guided UV module can obtain the first picture feature corresponding to the initial Y component, where the first picture feature can be a picture feature that has not been processed by a neural network. For example, the first picture feature can include but is not limited to at least one of the following: texture feature, subjective feature, frequency domain feature, or histogram feature. The Y-guided UV module can obtain the second picture feature corresponding to the initial V component, where the second picture feature can be a picture feature that has not been processed by a neural network. For example, the second picture feature can include but is not limited to at least one of the following: texture feature, subjective feature, frequency domain feature, or histogram feature. The Y-guided UV module can generate the adjusted component corresponding to the initial V component based on the first picture feature and the second picture feature. The generation method is described in the processing process of the initial U component.

In another embodiment, the Y-guided UV module can obtain the first picture feature corresponding to the initial Y component. The first picture feature can be the picture feature obtained by the neural network, for example, the first picture feature is the picture feature output by the neural network, where the first picture feature can include but is not limited to the first feature map, or weight coefficient map, etc. The Y-guided UV module can obtain the second picture feature corresponding to the initial U component. The second picture feature can be the picture feature obtained by the neural network, for example, the second picture feature is the picture feature output by the neural network, where the second picture feature includes but is not limited to the second feature map. The Y-guided UV module can generate the adjusted component corresponding to the initial U component based on the first picture feature and the second picture feature. For example, the adjusted component corresponding to the initial U component can be generated based on the first feature map corresponding to the initial Y component and the second feature map corresponding to the initial U component. For example, the adjusted component corresponding to the initial U component can be generated based on the weight coefficient map corresponding to the initial Y component and the second feature map corresponding to the initial U component. The above are just a few examples, not limited to these.

The Y-guided UV module can obtain the first picture feature corresponding to the initial Y component. The first picture feature can be the picture feature obtained by the neural network, for example, the first picture feature is the picture feature output by the neural network, where the first picture feature can include but is not limited to the first feature map, or weight coefficient map, etc. The Y-guided UV module can obtain the second picture feature corresponding to the initial V component. The second picture feature can be the picture feature obtained by the neural network, for example, the second picture feature is the picture feature output by the neural network, where the second picture feature includes but is not limited to the second feature map. The Y-guided UV module can generate the adjusted component corresponding to the initial V component based on the first picture feature and the second picture feature. The generation method is described in the processing process of the initial U component.

Embodiment 6: to fully utilize the information of the Y component in the U/V component, the Y component is convolved in the input stage of the post-processing network to obtain a feature map with multiple channels. The feature map includes different types of features of the Y component. These different types of features are added or concatenated with the feature maps obtained by convolving the U/V component, such that the subsequent neural network can learn multiple features of the Y component, thereby helping the U/V component improves the reconstruction quality.

For example, as shown in FIG. 6A, which is a schematic structural diagram of the post-processing network, after obtaining the initial Y component, initial U component, and initial V component, the Y-guided UV module can input the initial Y component to the first neural network (such as CNN1) to obtain the first feature map, where the first feature map can also be referred to as the Y feature map. The initial U component can be input into a second neural network (such as CNN2) to obtain a second feature map corresponding to the initial U component, where the second feature map can also be referred to as a U Feature Map. The initial V component can be input into a second neural network (such as CNN2) to obtain a second feature map corresponding to the initial V component, where the second feature map can also be referred to as a V Feature Map.

After the first feature map and the second feature map corresponding to the initial U component are obtained, the adjusted component corresponding to the initial U component can be generated based on the first feature map and the second feature map. For example, an Add operation is performed on the first feature map and the second feature map, as shown in FIG. 6A, ⊕ represents the Add operation of the feature map. The added feature map is input to a third neural network (such as CNN3) to obtain the adjusted component corresponding to the initial U component. Alternatively, the first feature map and the second feature map can be concatenated. ⊕ In FIG. 6A represents the concatenation operation of the feature maps, and the concatenated feature maps are input to a third neural network (such as CNN3) to obtain the adjusted component corresponding to the initial U component. After the first feature map and the second feature map corresponding to the initial V component are obtained, the adjusted component corresponding to the initial V component can be generated based on the first feature map and the second feature map. For example, an Add operation is performed on the first feature map and the second feature map, and the added feature map is input to the third neural network to obtain the adjusted component corresponding to initial V component. Alternatively, the concatenation operation can be performed on the first feature map and the second feature map, and the concatenated feature map can be input into a third neural network to obtain the adjusted component corresponding to the initial V component.

Performing the concatenation operation on the first feature map and the second feature map refers to performing the concatenation operation on the first feature map and the second feature map along the channel dimension.

For example, to implement the above operation correctly, the number of convolution kernels in the second neural network can be the same as the number of convolution kernels in the first neural network, such as CNN1 and CNN2 having the same number of convolution kernels. The processing procedure shown in FIG. 6A can also be represented as: U_{rec}/V_{rec} = f_{CNN3} (f_{CNN1}(Y) ⊕ f_{CNN2}(U/V)), where f_{CNN} represents the convolutional neural network, and "⊕" represents the addition or concatenation operation of the feature map. Y represents the initial component of Y, f_{CNN1}(Y) represents the first feature map, U represents the initial U component, f_{CNN2}(U) represents the second feature map, V represents the initial V component, f_{CNN2}(V) represents the second feature map, U_{rec} represents the adjusted component corresponding to the initial U component, and V_{rec} represents the adjusted component corresponding to initial V component.

Embodiment 7: to utilize the information of each feature map of the Y component, guided filtering can be introduced, which guides the U/V component to generate feature maps with stronger representation ability through the features generated by the Y component. Using attention to weight the pixel values in the U/V feature maps by using the feature map of the Y component as a guiding variable enhances the important features in the U/V component and suppresses the general features in the U/V component, thus achieving efficient feature transform and fusion between the Y component and the U/V component.

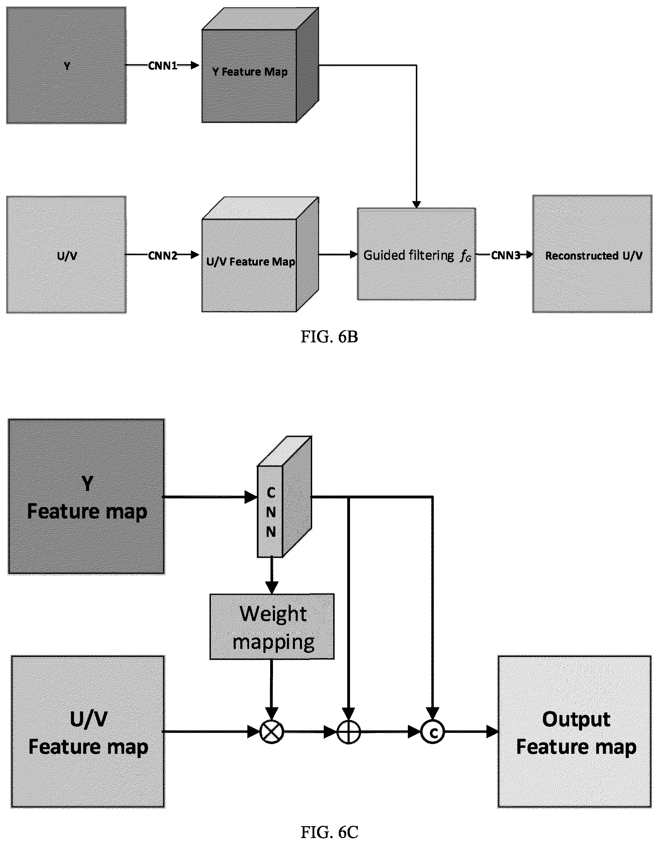

For example, as shown in FIG. 6B, which is a schematic structural diagram of the post-processing network, after obtaining the initial Y component, initial U component, and initial V component, the Y-guided UV module can input the initial Y component to the first neural network (such as CNN1) to obtain the first feature map, where the first feature map can also be referred to as the Y feature map. The initial U component can be input into a second neural network (such as CNN2) to obtain a second feature map corresponding to the initial U component, where the second feature map can also be referred to as a U Feature Map. The initial V component can be input into a second neural network (such as CNN2) to obtain a second feature map corresponding to the initial V component, where the second feature map can also be referred to as a V Feature Map.

After the first feature map and the second feature map corresponding to the initial U component are obtained, guided filtering can also be performed on the first feature map to obtain a weight coefficient map, and based on the weight coefficient map and the second feature map, the adjusted component corresponding to the initial U component can be generated. For example, based on the weight coefficient map and the second feature map, at least one of multiplication, addition, or concatenation operations can be performed to obtain an output feature map. For example, based on the weight coefficient map and the second feature map, multiplication and Add operations can be performed to obtain the output feature map, or based on the weight coefficient map and the second feature map, multiplication, addition, and concatenation operations can be performed to obtain the output feature map. After the output feature map is obtained, the output feature map can be input into a third neural network (such as CNN3) to obtain the adjusted component corresponding to the initial U component.

After the first feature map and the second feature map corresponding to the initial V component are obtained, guided filtering can also be performed on the first feature map to obtain a weight coefficient map, and based on the weight coefficient map and the second feature map, the adjusted component corresponding to the initial V component can be generated. For example, based on the weight coefficient map and the second feature map, at least one of multiplication, addition, or concatenation operations can be performed to obtain the output feature map. After the output feature map is obtained, the output feature map can be input to a third neural network (such as CNN3) to obtain the adjusted component corresponding to initial V component.

For example, the processing procedure shown in FIG. 6B can also be represented as: U_{rec}/V_{rec} = f_{CNN3}(f_{G}(f_{CNN1}(Y), f_{CNN2}(U/V))), where f_{CNN} represents convolutional neural network, and f_{G} represents guided filtering, where guided filtering takes the feature maps of Y and U/V component as inputs, and outputs the fused feature map after guided weighting. Y represents the initial component of Y, f_{CNN1}(Y) represents the first feature map, U represents the initial U component, f_{CNN2}(U) represents the second feature map, V represents the initial V component, f_{CNN2}(V) represents the second feature map, U_{rec} represents the adjusted component corresponding to the initial U component, and V_{rec} represents the adjusted component corresponding to initial V component.

In an embodiment, the implementation of guided filtering can be seen in FIG. 6C. The first feature map (Y Feature Map) can be convolved to obtain a convolved feature map (hereinafter referred to as convolved feature map A). For example, the first feature map is input to a CNN network, where the CNN network convolves the first feature map to obtain convolved feature map A. Then, the convolved feature map A is weight mapped to obtain the weight coefficient map after weight mapping.

When generating the adjusted component corresponding to the initial U component based on the weight coefficient map and the second feature map corresponding to the initial U component, the weight coefficient map and the second feature map (U Feature Map) corresponding to the initial U component can be multiplied to obtain the multiplied feature map. Then, the multiplied feature map and the convolved feature map A are added together to obtain the added feature map. Then, the concatenation operation is performed on the added feature map and the convolved feature map A to obtain the output feature map, where the output feature map is input to a third neural network (such as CNN3) to obtain the adjusted component corresponding to the initial U component.

When generating the adjusted component corresponding to the initial V component based on the weight coefficient map and the second feature map corresponding to the initial V component, the weight coefficient map and the second feature map (V Feature Map) corresponding to the initial V component can be multiplied to obtain the multiplied feature map. Then, the multiplied feature map and the convolved feature map A are added together to obtain the added feature map. Then, the concatenation operation is performed on the added feature map and the convolved feature map A to obtain the output feature map, where the output feature map is input to a third neural network (such as CNN3) to obtain the adjusted component corresponding to the initial V component.

As shown in FIG. 6C, after the first feature map of the Y component is processed through several convolutional layers, the convolved feature map A is obtained. The convolved feature map A is mapped to a specific weight factor (i.e., a weight coefficient map) through weight mapping. The weight coefficient map is multiplied with the second feature map of the U/V component to obtain the feature guiding map of the U/V component. Then, the convolved feature map A is added to the feature guiding map of the U/V component, and finally concatenated with the convolved feature map A to output the fused feature map (Output Feature Map). For example, the guided filtering process is represented as: Out = Concat((U/V) * f_{w}(f_{CNN}(Y)) + f_{CNN}(Y), f_{CNN}(Y)), where f_{w} represents weight mapping, Concat(·) represents the concatenation operation, f_{CNN}(Y) represents convolved feature map A, and Out represents the output feature map.

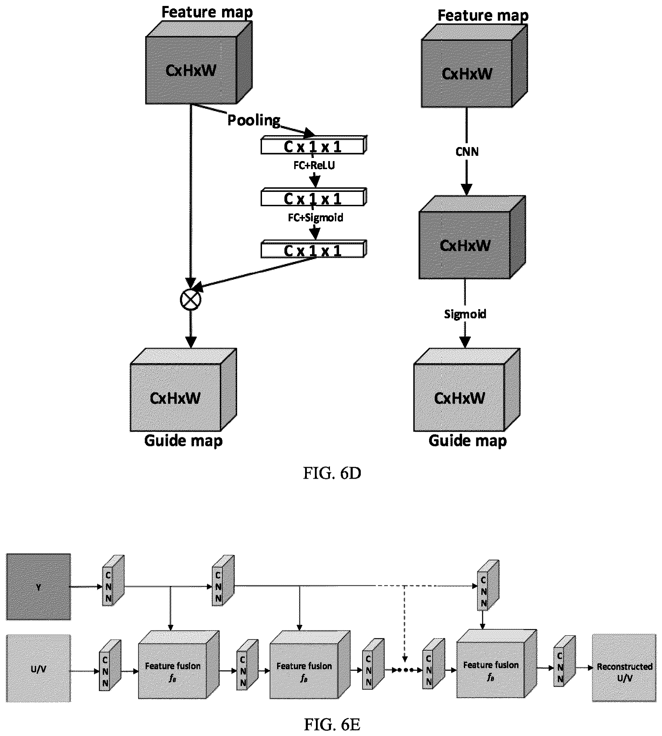

In an embodiment, during the weight mapping process, the convolutional feature map A is weight mapped to obtain the weight coefficient map after weight mapping. The implementation of weight mapping can be seen in FIG. 6D, which shows two weight mapping methods. In the first weight mapping method, pooling operation is performed on the convolved feature map A to obtain the pooled feature map. For example, pooling operation is performed on the convolved feature map A with a size of C * H * W to obtain a pooled feature map with a size of C * 1 * 1, that is, the resolution of the feature map is reduced to 1 * 1 through "pooling".

Then, the full connection operation and the ReLU activation operation are performed on the pooled feature map to obtain the ReLU activated feature map. For example, after the full connection operation (i.e., FC operation) and ReLU activation operation (i.e., ReLU operation) are performed on the pooled feature map with size C * 1 * 1, the ReLU activated feature map with size C * 1 * 1 is obtained. The full connection operation and Sigmoid activation operation are performed on the ReLU activated feature map to obtain the Sigmoid activated feature map. For example, the full connection operation (i.e., FC operation) and the Sigmoid activation operation (i.e., Sigmoid operation) are performed on the ReLU activated feature map with a size of C * 1 * 1, to obtain the Sigmoid activated feature map with a size of C * 1 * 1.

Then, a weight coefficient map is generated based on the convolved feature map A and the Sigmoid activated feature map. For example, the weight coefficient map is obtained by multiplying the convolved feature map A and the Sigmoid activated feature map. For example, the convolved feature map A with a size of C * H * W and the Sigmoid activated feature map with a size of C * 1 * 1 are multiplied to obtain a weight coefficient map with a size of C * H * W. Obviously, after the resolution of the feature map is reduced to 1 * 1 through "pooling", several full connection layers are passed through, and finally the weight factor of each channel in the original input feature map are obtained through the Sigmoid activation function. These weight factors will assign different weights to the channels in the original input feature map, and finally the weight coefficient map (also known as the weight feature map) is obtained.

In the second weight mapping method, convolution operation can be performed on the convolved feature map A to obtain the convolved feature map B. For example, the convolved feature map A with a size of C * H * W is input to the CNN network, and the CNN network convolves the convolved feature map A through several convolution layers to obtain the convolved feature map B with a size of C * H * W. Then, Sigmoid activation is performed on the convolved feature map B to obtain the weight coefficient map. For example, using the Sigmoid activation function to activate the convolved feature map B with a size of C * H * W, a weight coefficient map with a size of C * H * W is obtained. Obviously, by enabling the original input feature map to pass through several convolutional layers and then applying the Sigmoid activation function, the weight coefficient map is finally obtained.

The difference between the first weight mapping method and the second weight mapping method is that in the first weight mapping method, different weights are assigned to channels, and in the second weight mapping method, different weights are assigned to pixels in the feature map of each channel.

Embodiment 8: in both Embodiment 6 and Embodiment 7, feature extraction and information fusion of the Y component are performed in the input stage of the post-processing network. Unlike Embodiment 6 and Embodiment 7, in Embodiment 8, feature extraction and information fusion of the Y component are distributed in various stages of the post-processing network, and the features of the U/V component at different stages are fused with the feature of the Y component, to improve the enhancement ability of the post-processing network on the U/V component. For example, as shown in FIG. 6E, which is a schematic structural diagram of the post-processing network, after the Y-guided UV module obtains the initial Y component, the initial U component, and the initial V component, the feature extraction and information fusion of the Y component are distributed in various stages of the post-processing network. f_{B} represents the feature fusion process, where the feature fusion process can adopt the implementation method of Embodiment 6 or Embodiment 7. By fusing the information of the Y component and U/V component, the fused feature map is output, and after passing through several convolutional layers, the fused feature map after passing through several convolutional layers is used as the input of the next feature fusion process. Correspondingly, the Y component will also pass through several convolutional layers and be used as the input of the next feature fusion process. In Embodiment 8, multiple feature fusion processes are involved to fuse the feature map of the Y component with the feature map of the U/V component at various stages of the network.

In an embodiment, since the feature map of the Y component is fused with the feature maps of the U/V component at various stages of the network, multiple first feature maps and multiple second feature maps are involved. Taking K first feature maps and K+1 second feature map as examples, where K can be a positive integer greater than 1, after the initial Y component and initial U component are obtained, the initial Y component is input to the neural network to obtain the first first feature map, and the initial U component is input to the neural network to obtain the first second feature map. For the i-th first feature map and i-th second feature map, where the value range of i is from 2 to K, the (i-1)-th first feature map is input to the neural network to obtain the i-th first feature map, feature fusion is performed on the (i-1)-th first feature map and the (i-1)-th second feature map to obtain the fused feature, and the fused feature is input to the neural network to obtain the i-th second feature map. After the last second feature map (i.e., the (K+1)-th second feature map) is obtained, the adjusted component corresponding to the initial U component can be generated based on the last second feature map.

For example, taking K as 3 as an example, the initial Y component is input to the neural network a1 to obtain the first feature map b1. That is, neural network a1 performs several convolution operations on the initial Y component to obtain the first feature map b1. The initial U component is input into neural network c1 to obtain the second feature map d1, that is, neural network c1 performs several convolution operations on the initial U component to obtain the second feature map d1.

The first feature map b1 is input to the neural network a2 to obtain the first feature map b2, that is, the neural network a2 performs several convolution operations on the first feature map b1 to obtain the first feature map b2. Feature fusion is performed on the first feature map b1 and the second feature map d1 to obtain fused feature, and the fused feature is input to the neural network c2 to obtain the second feature map d2.

The first feature map b2 is input to the neural network a3 to obtain the first feature map b3, that is, the neural network a3 performs several convolution operations on the first feature map b2 to obtain the first feature map b3. Feature fusion is performed on the first feature map b2 and the second feature map d2 to obtain fused feature, and the fused feature is input to the neural network c3 to obtain the second feature map d3.

Then, feature fusion is performed on the first feature map b3 and the second feature map d3 to obtain fused feature, and the fused feature is input to the neural network c4 to obtain the second feature map d4. After the second feature map d4 is obtained, the adjusted component corresponding to the initial U component can be generated based on the second feature map d4. For example, the second feature map d4 can be used as the adjusted component corresponding to the initial U component, or the adjusted component corresponding to the initial U component can be obtained by performing operations on the second feature map d4.

In the above process, performing feature fusion on the first feature map and the second feature map to obtain the fused feature may include but is not limited to: adding the first feature map and the second feature map to obtain the fused feature; or performing a concatenation operation on the first feature map and the second feature map to obtain the fused feature; or performing guided filtering on the first feature map to obtain the weight coefficient map corresponding to the first feature map, and generating the fused feature based on the weight coefficient map and the second feature map. The implementation method of feature fusion can be referred to Embodiments 6 and 7, which will not be repeated here.

After the initial Y component and initial V component are obtained, the initial Y component is input to the neural network to obtain the first first feature map, and the initial V component is input to the neural network to obtain the first second feature map. For the i-th first feature map and i-th second feature map, where the value range of i is from 2 to K, the (i-1)-th first feature map is input to the neural network to obtain the i-th first feature map, feature fusion is performed on the (i-1)-th first feature map and the (i-1)-th second feature map to obtain the fused feature, and the fused feature is input to the neural network to obtain the i-th second feature map. After the last second feature map is obtained, the adjusted component corresponding to the initial V component can be generated based on the last second feature map. The obtaining method of the adjusted component corresponding to the initial V component can be referred to in the processing procedure of the initial U component.

Embodiment 9: in Embodiments 6, 7, and 8, the fusion method of the Y-component guiding map is designed. Unlike Embodiments 6, 7, and 8, in Embodiment 9, the Y-component is finely feature extracted from multiple dimensions and then fused into the post-processing network to improve the network's ability to enhance the U/V component.

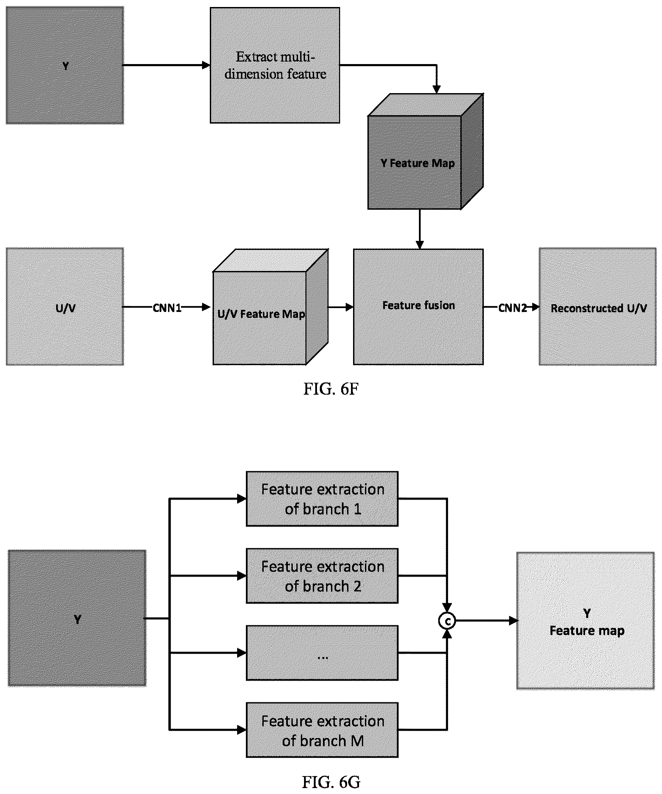

As shown in FIG. 6F, which is a schematic structural diagram of the post-processing network, the Y-guided UV module first performs multi-dimension feature extraction on the initial Y component after obtaining the initial Y component, initial U component, and initial V component. For example, picture features of M dimensions are extracted from the initial Y component, where M is a positive integer. Then, the picture features of M dimensions are concatenated to obtain the concatenated multi-dimension feature. After the multi-dimension feature is obtained, the multi-dimension feature can be input into the first neural network to obtain the first feature map (Y Feature Map). In addition, the Y-guided UV module can also input the initial U component to a second neural network (such as CNN2) to obtain a second feature map corresponding to the initial U component, where the second feature map can also be referred to as a U feature map. The initial V component can be input into a second neural network (such as CNN2) to obtain a second feature map corresponding to the initial V component, where the second feature map can also be referred to as a V Feature Map.

After the first feature map and the second feature map corresponding to the initial U component are obtained, the first feature map and the second feature map can be fused to obtain the adjusted component corresponding to the initial U component. After the first feature map and the second feature map corresponding to the initial V component are obtained, the first feature map and the second feature map can be fused to obtain the adjusted component corresponding to the initial V component. The feature fusion process can be referred to Embodiments 6, 7, and 8.

For example, the processing procedure shown in FIG. 6F can also be represented as: U_{rec}/V_{rec} = f_{CNN2}(f_{G}(f_{A}(Y), f_{CNN1}(U/V))), where f_{G} represents the feature fusion process, and f_{A} represents the multi-dimension feature extraction process of the Y component. In the multi-dimension feature extraction process, the initial Y component is taken as input, and the output is multiple feature maps of multiple dimensions, with each branch representing a feature of one dimension.

For example, as shown in FIG. 6G, which is a schematic diagram of the multi-dimension feature extraction process, the initial Y component is used as input, and the feature extraction structure of each branch is used to extract a feature of the initial Y component. For example, the initial Y component is input to the feature extraction structure of branch 1, where the feature extraction structure of branch 1 extracts the first dimension feature of the initial Y component. The initial Y component is input to the feature extraction structure of branch 2, where the feature extraction structure of branch 2 extracts the second dimension feature of the initial Y component. This process continues until the initial Y component is input to the feature extraction structure of branch M, where the feature extraction structure of branch M extracts the M-th dimension feature of the initial Y component. In summary, picture features of M dimensions can be extracted from the initial Y component, and the picture features of M dimensions can be concatenated to obtain the concatenated multi-dimension feature. After obtaining the concatenated multi-dimension feature, the multi-dimension feature can be used as the first feature map, or the multi-dimension feature can be input to the first neural network to obtain the first feature map.

In FIG. 6G, a schematic diagram of a multi-dimension feature extraction process is shown. Firstly, the Y component is processed through different feature extraction channels to obtain feature information in each dimension, and finally these feature information are concatenated to obtain the output as the Y component feature map. The multi-dimension feature extraction process can be represented as: Out = Concat(f_{ch-1}(Y), f_{ch-2}(Y), ..., f_{ch-M}(Y)), where f_{ch-i} represents the i-th feature extraction structure used to extract the feature of the i-th dimension, and Concat(·) represents the concatenation operation.

In an embodiment, picture features of M dimensions may include but are not limited to at least one of the following: picture features obtained by convolving the initial Y component with a convolutional kernel, picture features obtained by performing cascaded convolution on the initial Y component with two convolution kernels, first-order spatial domain features obtained by processing the initial Y component with a Sobel operator, second-order spatial domain features obtained by processing the initial Y component with a Laplacian operator, or frequency domain features obtained by Fourier transforming the initial Y component. The above picture features are just a few examples, and there are no restrictions on the types of picture features in this embodiment.

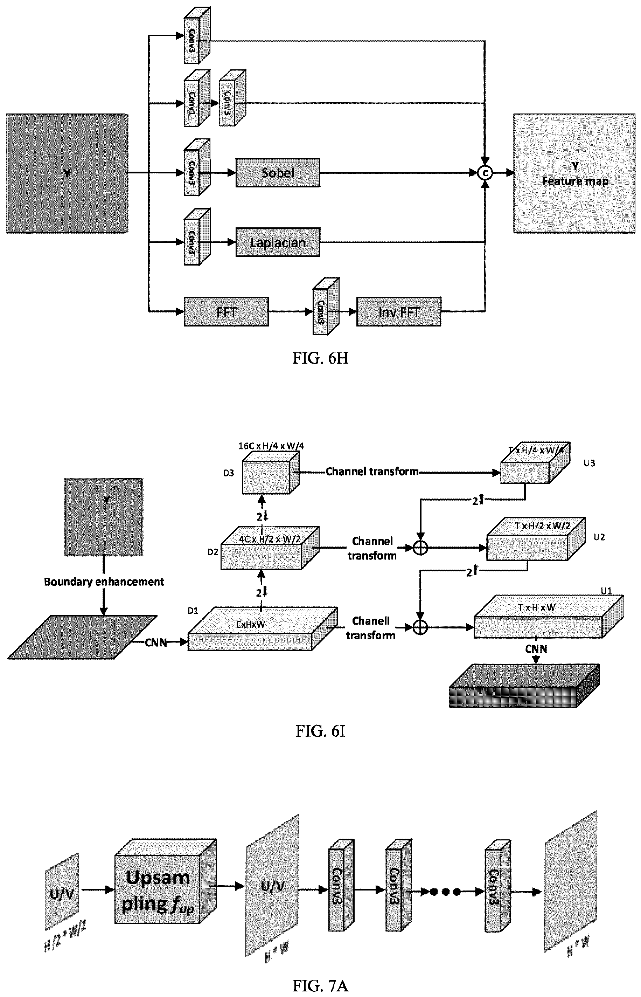

As shown in FIG. 6H, which is a schematic diagram of the multi-dimension feature extraction structure. The feature extraction structure of branch 1 (i.e., the first branch) uses a 3 * 3 convolution to obtain feature information. For example, a 3 * 3 convolution kernel is used to convolve the initial Y component to obtain the convolved picture feature. The feature extraction structure of branch 2 (i.e., the second branch) performs cascaded convolution with 1 * 1 and 3 * 3 convolution kernels to obtain the feature information after channel expansion and compression. For example, the 1 * 1 and 3 * 3 convolution kernels are used to perform cascaded convolution on the initial Y component to obtain the picture feature after convolution cascade. The feature extraction structure of branch 3 (i.e., the third branch) uses the Sobel operator to obtain the first-order spatial feature. For example, the Sobel operator is used to process the initial Y component to obtain the first-order spatial feature. The feature extraction structure of branch 4 (i.e., the fourth branch) uses the Laplacian operator to obtain a second-order spatial feature. For example, the Laplacian operator is used to process the initial Y component to obtain the second-order spatial feature. The feature extraction structure of branch 5 (i.e., the fifth branch) uses Fourier transform to obtain the frequency domain feature. For example, Fourier transform is performed on the initial Y component to obtain the frequency domain feature. After the features of the five dimensions mentioned above are obtained, these features can be concatenated to obtain the multi-dimension feature.

Embodiment 10: in Embodiments 6 to 9, the main focus is on selecting which Y component features and how to fuse Y component features with U/V component features. Unlike Embodiments 6 to 9, in Embodiment 10, the emphasis is on how to enhance the feature of the Y component. For example, after encoding and compressing the YUV components of a picture, there is also a certain loss of picture details in the Y component. Therefore, the Y component and the features of the Y component can be enhanced to some extent first. For example, due to the correlation between the three YUV components, although the compression loss of the Y component by the encoding end is less than the compression loss of the U/V component, the Y component can also be enhanced to better enhance the U/V component. Therefore, the initial Y component can be preprocessed through a preprocessing module to perform feature enhancement on the initial Y component.

For example, after the initial Y component is obtained, the preprocessing module can first perform edge enhancement on the initial Y component to obtain the edge-enhanced picture feature. Then, multi-dimension feature extraction is performed on the edge-enhanced picture feature to obtain the multi-dimension feature. After the multi-dimension feature is obtained, the multi-dimension feature can be used as preprocessed initial Y component, where the preprocessed initial Y component is input to the Y-guided UV module. The Y-guided UV module then inputs the preprocessed initial Y component to the first neural network to obtain the first feature map (Y Feature Map). In addition, the Y-guided UV module can also input the initial U component to a second neural network (such as CNN2) to obtain a second feature map corresponding to the initial U component, where the second feature map can also be referred to as a U feature map. The initial V component can be input into a second neural network (such as CNN2) to obtain a second feature map corresponding to the initial V component, where the second feature map can also be referred to as a V feature map.

After the first feature map and the second feature map corresponding to the initial U component are obtained, the first feature map and the second feature map can be fused to obtain the adjusted component corresponding to the initial U component. After the first feature map and the second feature map corresponding to the initial V component are obtained, the first feature map and the second feature map can be fused to obtain the adjusted component corresponding to the initial V component. The feature fusion process can be referred to Embodiments 6, 7, and 8.

When the preprocessing module performs multi-dimension feature extraction on the edge-enhanced picture feature to obtain the multi-dimension feature, the preprocessing module can perform convolution on the edge-enhanced picture feature to obtain a convolved feature; perform downsampling on the convolved feature to obtain a downsampled feature; perform channel transform on the downsampled feature to obtain the channel transformed feature; perform upsampling on the channel transformed feature to obtain the upsampled feature; and generate the multi-dimension feature based on the upsampled feature and the channel transformed feature.

As shown in FIG. 6I, which is a schematic structural diagram of the post-processing network, a multi-dimension enhancement method for the Y component is proposed. In the downsampling part, from D1 to D3, the resolution of the feature map gradually decreases and the number of channels gradually increases. In the upsampling part, from U3 to U1, the resolution of the feature map gradually increases and the number of channels remains unchanged. Channel transform is performed on D3, D2, and D1, and then respectively added to the upsampled feature maps of U3, U2, and U1, to obtain the multi-dimension enhanced feature.

Firstly, edge enhancement is performed on the initial Y component to obtain the edge-enhanced picture feature. For example, picture sharpening and enhancement is performed on the initial Y component to obtain the edge-enhanced picture feature. There is no limitation on the method of edge enhancement.

Taking 2 downsampling operations and 2 upsampling operations as an example, the number of downsampling operations can be more, and the number of upsampling operations can be more, which is not limited. After the edge-enhanced picture feature is obtained, the edge-enhanced picture feature is output to CNN to obtain feature D1 with a scale of C * H * W. The feature D1 is downsampled to obtain feature D2 with a scale of 4C * H/2 * W/2. The feature D2 is downsampled to obtain feature D3 with a scale of 16C * H/4 * W/4.

Channel transform is performed on feature D3 to obtain feature U3 with a scale of T * H/4 * W/4. Upsampling is performed on feature U3 and channel transform is performed on feature D2. The upsampled feature U3 and the channel transformed feature D2 are added to obtain feature U2 with a scale of T * H/2 * W/2. Upsampling is performed on feature U2 and channel transform is performed on feature D1. The upsampled feature U2 and the channel transformed feature D1 are added to obtain feature U1 with a scale of T * H * W. Obviously, feature U1 is a multi-dimension feature obtained through multi-dimension enhancement, which is the preprocessed initial Y component. The preprocessing module may output the preprocessed initial Y component. By performing multi-scale feature extraction on the Y component, the first feature map of the final output integrates feature information at different scales, which helps to enhance the U/V component.

Embodiment 11: in Embodiment 4, a resolution transform module is involved, where the resolution transform module is configured to upsample the resolution of the U component and restore the U component with the original signal resolution, such as obtaining the U component with a resolution of H * W. The resolution transform module is configured to upsample the resolution of the initial V component and restore the V component with the original signal resolution, such as obtaining the V component with a resolution of H * W. For example, in the JPEG-AI framework, the original U/V component is downsampled twice and then compressed and encoded by the encoding end. Therefore, the decoding end decodes and reconstructs the U/V component with a resolution that is half of the original signal resolution. In the post-processing network, there is a step of upsampling the U/V component to restore the reconstructed U/V component with the same resolution as the original signal. For example, when the resolution transform module upsamples the resolution of the U and/or V component, the upsampling methods may include but are not limited to: interpolation sampling, pixel-shuffle upsampling, deconvolution (DeConv), etc. The above are just a few examples, and this embodiment does not limit the methods for upsampling.

For example, since upsampling the resolution of U/V component can affect the computational complexity of the network model, i.e., an increase in resolution leads to an increase in computational complexity, the position of the resolution transform module can affect the computational complexity of the network model. Therefore, the position of the resolution transform module can be involved to reduce the computational complexity of the network model.

Case 1: as shown in FIG. 5B, the position of the resolution transform module can be position 1, that is, the resolution transform module upsamples the resolution of the initial U component to obtain a U component with a resolution of H * W. The U component with the resolution of H * W is input to the Y-guided UV module. The resolution transform module upsamples the resolution of the initial V component to obtain a V component with a resolution of H * W. The V component with the resolution of H * W is input to the Y-guided UV module. On this basis, for Embodiments 5 to 10, the initial U component is the upsampled U component, and the initial V component is the upsampled V component. The resolution of the upsampled U component can be equal to the resolution of the initial Y component, and the resolution of the upsampled V component can be equal to the resolution of the initial Y component. Therefore, Embodiments 5 to 10 are executed based on the initial Y component and the upsampled U component, and Embodiments 5 to 10 are executed based on the initial Y component and the upsampled V component.

From the above, it can be seen that in case 1, upsampling can be performed at the input of the network, as shown in FIG. 7A, which is a schematic diagram of upsampling at the input of the network. That is, at the input of the network, the initial U component can be upsampled to obtain the upsampled U component, such as the U component with a resolution of H * W. At the input of the network, the initial V component can be upsampled to obtain the upsampled V component, such as the V component with a resolution of H * W.

Case 2: as shown in FIG. 5B, the position of the resolution transform module can be position 2, that is, the resolution transform module upsamples the resolution of the U component output by the Y-guided UV module to obtain a U component with a resolution of H * W. The U component with the resolution of H * W is input to the YUV signal enhancement module. The resolution transform module upsamples the resolution of the V component output by the Y-guided UV module to obtain a V component with a resolution of H * W. The V component with the resolution of H * W is input to the YUV signal enhancement module. On this basis, for Embodiments 5 to 10, the initial U component is the U component before upsampling, and the initial V component is the V component before upsampling. The resolution of the U component before upsampling can be less than the resolution of the initial Y component, and the resolution of the V component before upsampling can be less than the resolution of the initial Y component. Therefore, Embodiments 5 to 10 are executed based on the initial Y component and the U component before upsampling, and Embodiments 5 to 10 are executed based on the initial Y component and the V component before upsampling. After the adjusted component corresponding to the U/V component is obtained based on Embodiments 5 to 10, the adjusted component can be upsampled to obtain the upsampled adjusted component. The upsampled adjusted component are then input to the YUV signal enhancement module, and the resolution of the upsampled adjusted component is equal to the resolution of the initial Y component.

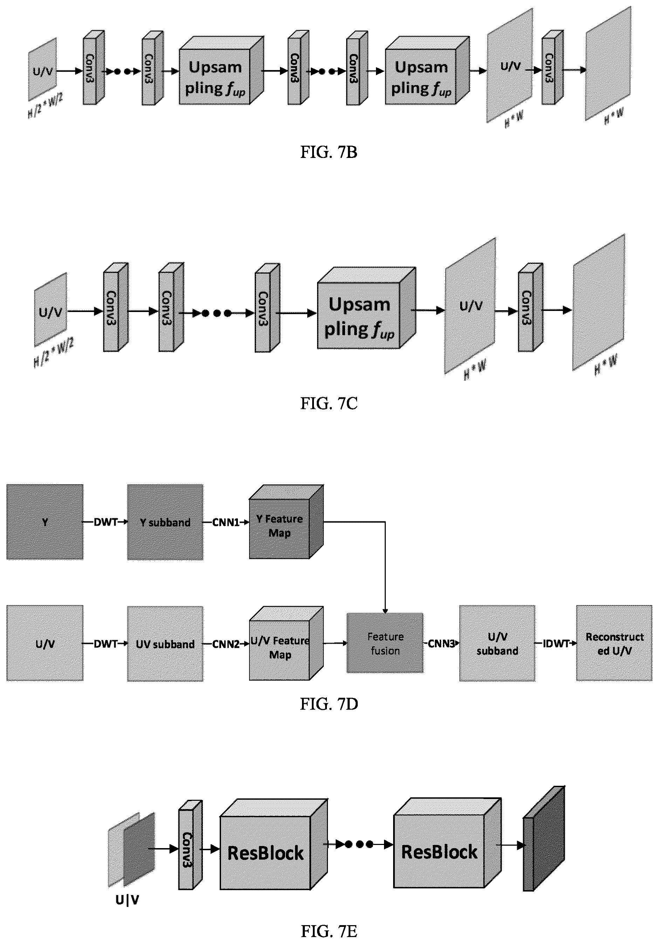

From the above, it can be seen that in case 2, progressive upsampling can be performed layer by layer in the network, as shown in FIG. 7B, which is a schematic diagram of progressive upsampling layer by layer in the network. That is, in multiple network layers, the initial U component can be upsampled to obtain the upsampled U component, and the resolution of the upsampled U component can be equal to the resolution of the initial Y component, such as the U component with a resolution of H * W. In multiple network layers, the initial V component can be upsampled to obtain the upsampled V component, and the resolution of the upsampled V component can be equal to the resolution of the initial Y component, such as the V component with a resolution of H * W.

Case 3: as shown in FIG. 5B, the position of the resolution transform module can be position 3, where the resolution transform module upsamples the resolution of the U component output by the YUV signal enhancement module to obtain a U component with a resolution of H * W, and finally outputs this H * W U component. The resolution transform module upsamples the resolution of the V component output by the YUV signal enhancement module to obtain a V component with a resolution of H * W, and finally outputs this H * W V component. On this basis, for Embodiments 5 to 10, the initial U component is the U component before upsampling, and the initial V component is the V component before upsampling. The resolution of the U component before upsampling can be less than the resolution of the initial Y component, and the resolution of the V component before upsampling can be less than the resolution of the initial Y component. Therefore, Embodiments 5 to 10 are executed based on the initial Y component and the U component before upsampling, and Embodiments 5 to 10 are executed based on the initial Y component and the V component before upsampling. After the adjusted component corresponding to the U/V component is obtained based on Embodiments 5 to 10, the adjusted component is input to the YUV signal enhancement module, and the adjusted component is the U/V component before upsampling, where the U/V component before upsampling are less than the resolution of the initial Y component. Therefore, the YUV signal enhancement module enhances the signal based on the U/V component before upsampling to obtain the enhanced U/V component. After obtaining the U/V component after signal enhancement, the U/V component are upsampled to obtain the upsampled U/V component. The resolution of the upsampled U/V component is equal to the resolution of the initial Y component.

From the above, it can be seen that in case 3, upsampling can be performed at the output of the network, as shown in FIG. 7C, which is a schematic diagram of upsampling at the output of the network. That is, at the output of the network, the U component can be upsampled to obtain the upsampled U component, and the resolution of the upsampled U component can be equal to the resolution of the initial Y component, such as the U component with a resolution of H * W. At the output of the network, the V component can be upsampled to obtain the upsampled V component, and the resolution of the upsampled V component can be equal to the resolution of the initial Y component, such as the V component with a resolution of H * W.

Embodiment 12: in Embodiment 4, a resolution transform module is involved. In the first aspect, the resolution transform module can reduce the resolution of the feature map appropriately by using a resolution transform without information loss, thereby effectively reducing the computational complexity of the network. In the second aspect, the resolution transform module can upsample the resolution of the reconstructed U and V components, thereby restoring the U and V components with the same resolution as the original signal. The functionality of the second aspect is described in Embodiment 11.

The functionality of the first aspect can be implemented by the resolution transform module or the Y-guided UV module. For example, by reducing the resolution of YUV components or intermediate component, network complexity can be effectively reduced, and resolution enhancement can be performed at the output position of the network to restore the original resolution. For example, wavelet transform (such as Haar wavelet transform) can be used to halve the resolution of the original picture, which can reduce the computational complexity of the network by almost four times. When hardware has high requirements for computational complexity, it is also possible to consider using wavelet transform sequentially multiple times to further reduce resolution. For several frequency bands after wavelet transform, all of them can be used or some frequency bands can be selected.

For example, as shown in FIG. 7D, which is a schematic structural diagram of the post-processing network, the initial Y component can be subjected to wavelet transform (DWT transform in FIG. 7D) to obtain multiple frequency bands after wavelet transform. The multiple frequency bands or some of the multiple frequency bands (i.e., Y sub bands) can be input to the first neural network to obtain the first feature map (Y Feature Map). The initial U component can be subjected to wavelet transform (DWT transform in FIG. 7D) to obtain multiple frequency bands after wavelet transform. The multiple frequency bands or some of the multiple frequency bands (i.e., U sub bands) can be input to the second neural network to obtain the second feature map (U Feature Map). The initial component of V can be subjected to wavelet transform to obtain multiple frequency bands after wavelet transform. The multiple frequency bands or some of the multiple frequency bands (i.e., V sub bands) can be input to the second neural network to obtain the second feature map (V Feature Map). After the first feature map and the second feature map corresponding to the initial U component are obtained, the first feature map and the second feature map can be fused to obtain the adjusted component corresponding to the initial U component. After the first feature map and the second feature map corresponding to the initial V component are obtained, the first feature map and the second feature map can be fused to obtain the adjusted component corresponding to the initial V component. The feature fusion process can be referred to Embodiments 6, 7, and 8.

It should be noted that when performing feature fusing on the first feature map and the second feature map to obtain the adjusted component corresponding to the initial U component, Embodiments 6, 7, and 8 are first used to obtain the fused feature. Then, the fused feature is input to the neural network (CNN3) to obtain the output feature (U sub bands) of the neural network. The output feature can also be subjected to wavelet inverse transform (i.e., the inverse operation of wavelet transform, IDWT (Inverse Discrete Wavelet Transform) in FIG. 7D) to obtain the adjusted U component. When performing feature fusing on the first feature map and the second feature map to obtain the adjusted component corresponding to the initial V component, Embodiments 6, 7, and 8 are first used to obtain the fused feature. Then, the fused feature is input to the neural network (CNN3) to obtain the output feature (V sub bands) of the neural network. The output feature can also be subjected to wavelet inverse transform (i.e., the inverse operation of wavelet transform, IDWT transform in FIG. 7D) to obtain the adjusted V component.

Embodiment 13: in Embodiment 4, a YUV signal enhancement module is involved. The Y component is signal enhanced by the YUV signal enhancement module to make the reconstructed Y component close to the original signal before compression. The U component is signal enhanced by the YUV signal enhancement module to make the reconstructed U component close to the original signal before compression. The V component is signal enhanced by the YUV signal enhancement module to make the reconstructed V component close to the original signal before compression. On this basis, the YUV signal enhancement module can perform feature enhancement on the initial Y component to obtain the target component corresponding to the Y component, where the target component is the signal restored Y component. The YUV signal enhancement module can perform feature enhancement on the adjusted U component to obtain the target component corresponding to the U component, where the target component is the signal restored U component. The YUV signal enhancement module can perform feature enhancement on the adjusted V component to obtain the target component corresponding to the V component, where the target component is the signal restored V component.

In an embodiment, the initial Y component can be feature enhanced through at least one residual block network to obtain the target component corresponding to the Y component. The adjusted component of the U component may be feature enhanced by at least one residual block network to obtain a target component corresponding to the U component. The adjusted component of the V component may be feature enhanced by at least one residual block network to obtain a target component corresponding to the V component. As shown in FIG. 7E, which is a schematic diagram of using a residual block cascade network to enhance the Y, U, and V components. The structure of the residual block cascade network is not limited.

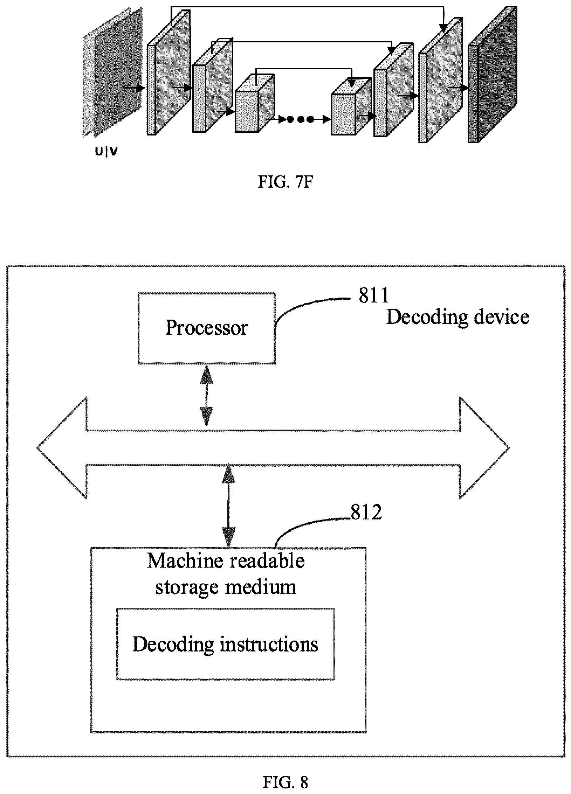

In an embodiment, the initial Y component can be feature enhanced through the U-Net network to obtain the target component corresponding to the Y component. The adjusted component of the U component may be feature enhanced by the U-Net network to obtain a target component corresponding to the U component. The adjusted component of the V component may be feature enhanced by the U-Net network to obtain a target component corresponding to the V component. As shown in FIG. 7F, which is a schematic diagram of using U-Net network to enhance Y, U, and V components. The U-Net network includes multiple downsampling network layers and multiple upsampling network layers, and the structure of the U-Net network is not limited.

The above embodiments can be implemented separately or in combination. For example, each of embodiments 1-13 can be implemented separately, and at least two of embodiments 1-13 can be implemented in combination.

For example, in the above embodiments, the content of the encoding end can also be applied to the decoding end, that is, the decoding end can process in the same way, and the content of the decoding end can also be applied to the encoding end, that is, the encoding end can process in the same way.

Based on the same application concept as the above method, the embodiments of the present disclosure further provide a decoding device. The decoding device is applied to the decoding end. The decoding device includes: one or more memories configured to store video data; and a decoder configured to implement the decoding method in embodiments 1-13, namely the processing flow of the decoding end.

For example, in an embodiment, a decoder is configured to implement:
decoding a bitstream corresponding to a current picture block to obtain a reconstructed picture block, where the reconstructed picture block including a first initial component and a second initial component, where a resolution of the first initial component is greater than or equal to a resolution of the second initial component;
generating an adjusted component corresponding to the second initial component based on the first initial component and the second initial component; and
performing feature enhancement on the adjusted component, to obtain a restored target component corresponding to the second initial component.

For example, if the reconstructed picture block is in YUV format, the first initial component can be the luma component, and the second initial component can be the chroma U component and/or chroma V component; or if the reconstructed picture block is in RGB format, the first initial component can be the G component, and the second initial component can be the R component and/or B component.

For example, the decoder is configured to obtain a first picture feature corresponding to the first initial component, where the first picture feature includes a picture feature not processed by a neural network and/or a picture feature obtained by a neural network; obtain a second picture feature corresponding to the second initial component, where the second picture features include a picture feature not processed by a neural network and/or a picture feature obtained by a neural network; and generate a adjusted component based on the first picture feature and the second picture feature.

For example, the decoder is configured to further implement: if the first picture feature includes a first feature map obtained by a neural network, and the second picture feature includes a second feature map obtained by a neural network, inputting the first initial component to the first neural network to obtain the first feature map; inputting the second initial component to the second neural network to obtain the second feature map; adding the first feature map and the second feature map to obtain the adjusted component, or performing a concatenation operation on the first feature map and the second feature map to obtain the adjusted component.

For example, the decoder is configured to further implement: if the first picture feature includes a weight coefficient map obtained through a neural network, and the second picture feature includes a second feature map obtained through a neural network, inputting the first initial component to the first neural network to obtain the first feature map corresponding to the first initial component, and performing guided filtering on the first feature map to obtain a weight coefficient map; inputting the second initial component to the second neural network to obtain the second feature map; and generating the adjusted component based on the weight coefficient map and the second feature map.

For example, the decoder is configured to perform convolution on the first feature map to obtain a convolved feature map; and perform weight mapping on the convolved feature map to obtain the weight coefficient map.

For example, the decoder is configured to perform pooling on the convolved feature map; perform full connection and ReLU activation on the pooled feature map; perform full connection and Sigmoid activation on the ReLU activated feature map; and generate the weight coefficient map based on the convolved feature map and the Sigmoid activated feature map.

For example, the decoder is configured to perform convolution and Sigmoid activation on the convolved feature map to obtain the weight coefficient map.

For example, the decoder is configured to implement: multiplying the weight coefficient map and the second feature map to obtain the multiplied feature map; performing convolution on the first feature map to obtain the convolved feature map; adding the multiplied feature map and the convolved feature map to obtain the added feature map; and performing a concatenation operation on the added feature map and the convolved feature map to obtain the adjusted component.

For example, the decoder is configured to further implement: if the first picture feature includes K first feature maps obtained through a neural network, and the second picture feature includes K+1 second feature maps obtained through a neural network, for the first first feature map and the first second feature map, inputting the first initial component to the neural network to obtain the first first feature map, and inputting the second initial component to the neural network to obtain the first second feature map; for the i-th first feature map and i-th second feature map, where i is any integer greater than or equal to 2 and less than or equal to K, and K can be a positive integer greater than 1, inputting the (i-1)-th first feature map to the neural network to obtain the i-th first feature map; performing feature fusion on the (i-1)-th first feature map and the (i-1)-th second feature map to obtain a fused feature, and inputting the fused feature into a neural network to obtain the i-th second feature map; and after obtaining the last second feature map, generating the adjusted component based on the last second feature map.

For example, the decoder is configured to implement: extracting picture features of M dimensions from the first initial component, where M is a positive integer; performing a concatenation operation on the picture features of M dimensions to obtain a concatenated multi-dimension feature; and inputting the multi-dimension feature into the first neural network to obtain the first feature map.

For example, the decoder is configured to implement: performing wavelet transform on the first initial component to obtain frequency bands after wavelet transform; inputting the frequency bands or a part of the frequency bands into a first neural network to obtain the first feature map; performing wavelet transform on the second initial component to obtain frequency bands after wavelet transform; inputting the frequency bands or a part of the frequency bands into a second neural network to obtain the second feature map.

For example, the decoder is configured to implement: preprocessing the first initial component to obtain the preprocessed first initial component, where the preprocessed first initial component is used as input to the first neural network to obtain the first feature map; the decoder is configured to implement: performing edge enhancement on the first initial component to obtain an edge-enhanced picture feature; performing multi-dimension feature extraction on the edge-enhanced picture feature to obtain a multi-dimension feature; and determining the preprocessed first initial component based on the multi-dimension feature.

For example, the decoder is configured to: perform convolution on the edge-enhanced picture feature to obtain a convolved feature; perform downsampling on the convolved feature to obtain a downsampled feature; perform channel transform on the downsampled feature to obtain the channel transformed feature; perform upsampling on the channel transformed feature to obtain the upsampled feature; and generate the multi-dimension feature based on the upsampled feature and the channel transformed feature.

For example, the decoder is configured to further implement: before generating the adjusted component corresponding to the second initial component, upsampling the second initial component based on the first initial component and the second initial component to obtain the upsampled second initial component, where the resolution of the upsampled second initial component is equal to the resolution of the first initial component.

For example, the decoder is configured to further implement: before performing feature enhancement on the adjusted component to obtain the restored target component corresponding to the second initial component, upsampling the adjusted component to obtain the upsampled adjusted component, where the resolution of the upsampled adjusted component is equal to the resolution of the first initial component.

For example, the decoder is configured to further implement: after enhancing the feature of the adjusted component to obtain the restored target component corresponding to the second initial component, upsampling the target component to obtain the upsampled target component, where the resolution of the upsampled target component is equal to the resolution of the first initial component.

For example, the decoder is configured to further implement: performing feature enhancement on the adjusted component through at least one residual block network to obtain the target component corresponding to the second initial component; or performing feature enhancement on the adjusted component through a U-Net network to obtain the target component corresponding to the second initial component.

Based on the same application concept as the above methods, a decoding device (also referred to as a video decoder) provided in the embodiments of the present disclosure has, from a hardware perspective, a hardware architecture, as shown in FIG. 8. The hardware architecture includes processor 811 and machine-readable storage medium 812, where machine-readable storage medium 812 stores machine executable instructions that can be executed by processor 811. Processor 811 is configured to execute machine executable instructions to implement the decoding methods of embodiments 1-12 in the present disclosure.

For example, in an embodiment, processor 811 executes machine executable instructions to implement:
decoding a bitstream corresponding to a current picture block to obtain a reconstructed picture block, where the reconstructed picture block including a first initial component and a second initial component, where a resolution of the first initial component is greater than or equal to a resolution of the second initial component;
generating an adjusted component corresponding to the second initial component based on the first initial component and the second initial component; and
performing feature enhancement on the adjusted component, to obtain a restored target component corresponding to the second initial component.

Based on the same application concept as the above methods, the embodiments of the present disclosure provide an electronic device. The electronic device includes processor and machine-readable storage medium, where machine-readable storage medium stores machine executable instructions that can be executed by processor; the processor is configured to execute machine executable instructions to implement the decoding method of embodiments 1-12 in the present disclosure.

Based on the same application concept as the above methods, the embodiments of the present disclosure further provides a machine-readable storage medium, which stores several computer instructions. When the computer instructions are executed by a processor, the methods in the embodiments of the present disclosure can be implemented, such as the decoding method in the above embodiments.

Based on the same application concept as the above methods, the embodiments of the present disclosure further provides a computer application program that, when executed by a processor, the decoding method in the embodiments of the present disclosure are implemented.

Based on the same application concept as the above method, the embodiments of the present disclosure further propose a decoding apparatus, which can be applied to the decoding end (also known as a video decoder). The decoding apparatus may include:
a decoding module, configured to decode a bitstream corresponding to a current picture block to obtain a reconstructed picture block, where the reconstructed picture block including a first initial component and a second initial component, where a resolution of the first initial component is greater than or equal to a resolution of the second initial component; a determining module, configured to generate an adjusted component corresponding to the second initial component based on the first initial component and the second initial component; and a processing module, configured to perform feature enhancement on the adjusted component, to obtain a restored target component corresponding to the second initial component.

For example, if the reconstructed picture block is in YUV format, the first initial component can be the luma component, and the second initial component can be the chroma U component and/or chroma V component; or if the reconstructed picture block is in RGB format, the first initial component can be the G component, and the second initial component can be the R component and/or B component.

For example, when generating the adjusted component corresponding to the second initial component based on the first initial component and the second initial component, the determining module is specifically configured to: obtain a first picture feature corresponding to the first initial component, where the first picture feature includes a picture feature not processed by a neural network and/or a picture feature obtained by a neural network; obtain a second picture feature corresponding to the second initial component, where the second picture features include a picture feature not processed by a neural network and/or a picture feature obtained by a neural network; and generate an adjusted component based on the first picture feature and the second picture feature.

For example, if the first picture feature includes a picture feature not processed by a neural network, the first picture feature may include at least one of the following: a texture feature, a subjective feature, a frequency domain feature, or a histogram feature; and if the second picture feature includes a picture feature not processed by a neural network, the second picture feature may include at least one of the following: a texture feature, a subjective feature, a frequency domain feature, or a histogram feature.

For example, if the first picture feature includes a first feature map obtained by a neural network, and the second picture feature includes a second feature map obtained by a neural network, when generating the adjusted component corresponding to the second initial component based on the first initial component and the second initial component, the determining module is configured to: input the first initial component to the first neural network to obtain the first feature map; input the second initial component to the second neural network to obtain the second feature map; add the first feature map and the second feature map to obtain the adjusted component, or perform a concatenation operation on the first feature map and the second feature map to obtain the adjusted component.

For example, if the first picture feature includes a weight coefficient map obtained through a neural network, and the second picture feature includes a second feature map obtained through a neural network, when generating the adjusted component corresponding to the second initial component based on the first initial component and the second initial component may include, the determining module is configured to implement: inputting the first initial component to the first neural network to obtain the first feature map corresponding to the first initial component, and performing guided filtering on the first feature map to obtain a weight coefficient map; inputting the second initial component to the second neural network to obtain the second feature map; and generating the adjusted component based on the weight coefficient map and the second feature map.

For example, when performing guided filtering on the first feature map to obtain the weight coefficient map, the determining module is specifically configured for: performing convolution on the first feature map to obtain a convolved feature map; and performing weight mapping on the convolved feature map to obtain the weight coefficient map.

For example, when performing weight mapping on the convolved feature map to obtain the weight coefficient map, the determining module is specifically configured to: perform pooling on the convolved feature map; perform full connection and ReLU activation on the pooled feature map; perform full connection and Sigmoid activation on the ReLU activated feature map; and generate the weight coefficient map based on the convolved feature map and the Sigmoid activated feature map.

For example, when performing weight mapping on the convolved feature map to obtain the weight coefficient map, the determining module is configured to perform convolution and Sigmoid activation on the convolved feature map to obtain the weight coefficient map.

For example, when generating the adjusted component based on the weight coefficient map and the second feature map, the determining module is specifically configured for: multiplying the weight coefficient map and the second feature map to obtain the multiplied feature map; performing convolution on the first feature map to obtain the convolved feature map; adding the multiplied feature map and the convolved feature map to obtain the added feature map; and performing a concatenation operation on the added feature map and the convolved feature map to obtain the adjusted component.

For example, if the first picture feature includes K first feature maps that are processed through a neural network, and the second picture feature includes K+1 second feature maps that are processed through a neural network, when generating the adjusted component corresponding to the second initial component based on the first initial component and the second initial component, the determining module is configured for: for the first first feature map and the first second feature map, inputting the first initial component to the neural network to obtain the first first feature map, and inputting the second initial component to the neural network to obtain the first second feature map; for the i-th first feature map and i-th second feature map, where i is any integer greater than or equal to 2 and less than or equal to K, and K can be a positive integer greater than 1, inputting the (i-1)-th first feature map to the neural network to obtain the i-th first feature map; performing feature fusion on the (i-1)-th first feature map and the (i-1)-th second feature map to obtain a fused feature, and inputting the fused feature into a neural network to obtain the i-th second feature map; and after obtaining the last second feature map, generating the adjusted component based on the last second feature map.

For example, when performing feature fusion on the first feature map and the second feature map to obtain the fused feature, the determining module is specifically configured for: adding the first feature map and the second feature map to obtain the fused feature; or performing a concatenation operation on the first feature map and the second feature map to obtain the fused feature; or performing guided filtering on the first feature map to obtain the weight coefficient map corresponding to the first feature map, and generating the fused feature based on the weight coefficient map and the second feature map.

For example, when inputting the first initial component to the first neural network to obtain the first feature map, the determining module is configured for: extracting picture features of M dimensions from the first initial component, where M is a positive integer; performing a concatenation operation on the picture features of M dimensions to obtain a concatenated multi-dimension feature; and inputting the multi-dimension feature into the first neural network to obtain the first feature map.

For example, picture features of M dimensions include to at least one of the following: picture features obtained by convolving the first initial component with a convolutional kernel, picture features obtained by performing cascaded convolution on the first initial component with two convolution kernels, first-order spatial domain features obtained by processing the first initial component with a Sobel operator, second-order spatial domain features obtained by processing the first initial component with a Laplacian operator, or frequency domain features obtained by Fourier transforming the first initial component.

For example, when inputting the first initial component to the first neural network to obtain the first feature map, the determining module is specifically configured for: performing wavelet transform on the first initial component to obtain frequency bands after wavelet transform; inputting the frequency bands or a part of the frequency bands into a first neural network to obtain the first feature map; when inputting the second initial component to the second neural network to obtain the second feature map, the determining module is specifically configured for: performing wavelet transform on the second initial component to obtain frequency bands after wavelet transform; inputting the frequency bands or a part of the frequency bands into a second neural network to obtain the second feature map.

For example, before inputting the first initial component into the first neural network to obtain the first feature map, the determining module is configured for: preprocessing the first initial component to obtain the preprocessed first initial component, where the preprocessed first initial component is used as input to the first neural network to obtain the first feature map. When preprocessing the first initial component to obtain the preprocessed first initial component, the determining module is specifically configured for: performing edge enhancement on the first initial component to obtain an edge-enhanced picture feature; performing multi-dimension feature extraction on the edge-enhanced picture feature to obtain a multi-dimension feature; and determining the preprocessed first initial component based on the multi-dimension feature.

For example, when performing multi-dimension feature extraction on the edge-enhanced picture feature, to obtain the multi-dimension feature, the determining module is specifically configured to: perform convolution on the edge-enhanced picture feature to obtain a convolved feature; perform downsampling on the convolved feature to obtain a downsampled feature; perform channel transform on the downsampled feature to obtain the channel transformed feature; perform upsampling on the channel transformed feature to obtain the upsampled feature; and generate the multi-dimension feature based on the upsampled feature and the channel transformed feature.

For example, before generating the adjusted component corresponding to the second initial component, the determining module is configured to implement: upsampling the second initial component based on the first initial component and the second initial component to obtain the upsampled second initial component, where the resolution of the upsampled second initial component is equal to the resolution of the first initial component.

For example, before performing feature enhancement on the adjusted component to obtain the restored target component corresponding to the second initial component, the determining module is configured to implement: upsampling the adjusted component to obtain the upsampled adjusted component, where the resolution of the upsampled adjusted component is equal to the resolution of the first initial component.

For example, after enhancing the feature of the adjusted component to obtain the restored target component corresponding to the second initial component, the processing module is configured to implement: upsampling the target component to obtain the upsampled target component, where the resolution of the upsampled target component is equal to the resolution of the first initial component.

For example, when performing feature enhancement on the adjusted component to obtain the restored target component corresponding to the second initial component, the processing module is configured to: perform feature enhancement on the adjusted component through at least one residual block network to obtain the target component; or perform feature enhancement on the adjusted component through a U-Net network to obtain the target component.

It should be understood by those skilled in the art that embodiments of the present disclosure can be provided as methods, systems, or computer program products. The present disclosure can take the form of an entirely hardware embodiment, an entirely software embodiment, or an embodiment combining software and hardware aspects. The present disclosure can employ the form of a computer program product implemented on one or more computer-usable storage media (including, but not limited to, disk storage, CD-ROM, optical storage, etc.), where the one or more computer-usable storage media having computer-usable program code. The above description is only embodiments of the present disclosure and is not intended to limit the present disclosure.

For those skilled in the art, various modifications and changes can be made in the present disclosure. Any modification, equivalent replacement, improvement, etc. present the spirit and principle of the present disclosure shall be included in the scope of the claims of the present disclosure.

## Claims

1. A decoding method, comprising:
decoding a bitstream corresponding to a current picture block to obtain a reconstructed picture block, wherein the reconstructed picture block comprises a first initial component and a second initial component, wherein a resolution of the first initial component is greater than or equal to a resolution of the second initial component;
generating an adjusted component corresponding to the second initial component based on the first initial component and the second initial component; and
performing feature enhancement on the adjusted component, to obtain a restored target component corresponding to the second initial component.

2. The method according to claim 1, wherein the reconstructed picture block is a reconstructed picture block in a YUV format, the first initial component is a luma component, and the second initial component is a chroma U component and a chroma V component.

3. The method according to claim 1, wherein generating the adjusted component corresponding to the second initial component based on the first initial component and the second initial component comprises:
obtaining a first picture feature corresponding to the first initial component, wherein the first picture feature comprises a picture feature not processed by a neural network;
obtaining a second picture feature corresponding to the second initial component, wherein the second picture feature comprise a picture feature not processed by a neural network; and
generating the adjusted component based on the first picture feature and the second picture feature.

4. The method according to claim 3, wherein the first picture feature comprises a Haar wavelet frequency domain feature, and the second picture feature comprises a Haar wavelet frequency domain feature.

5. The method according to claim 1 or 3, wherein generating the adjusted component corresponding to the second initial component based on the first initial component and the second initial component comprises:
performing one or more Haar wavelet transforms on the first initial component to obtain transformed frequency bands as a first feature map;
performing one or more Haar wavelet transforms on the second initial component to obtain transformed frequency bands as a second feature map; and
performing a concatenation operation on the first feature map and the second feature map, to obtain the adjusted component.

6. The method according to claim 5, wherein performing the concatenation operation on the first feature map and the second feature map comprises:
performing the concatenation operation on the first feature map and the second feature map along a channel dimension.

7. The method according to claim 5, wherein
performing one or more Haar wavelet transforms on the first initial component to obtain the transformed frequency bands comprises:
performing two Haar wavelet transforms on the first initial component to obtain the frequency bands after the two Haar wavelet transforms;
performing one or more Haar wavelet transforms on the second initial component to obtain the transformed frequency bands comprises:
performing two Haar wavelet transforms on the second initial component to obtain the frequency bands after the two Haar wavelet transforms.

8. The method according to claim 5, wherein
performing the Haar wavelet transforms on the first initial component to obtain the transformed frequency bands comprises:
performing two Haar wavelet transforms on the first initial component to obtain the frequency bands after the two Haar wavelet transforms;
performing the Haar wavelet transforms on the second initial component to obtain the transformed frequency bands comprises:
performing two Haar wavelet transforms on the second initial component to obtain the frequency bands after the two Haar wavelet transforms.

9. The method according to claim 7 or 8, wherein
performing the two Haar wavelet transforms on the first initial component to obtain the frequency bands after the two Haar wavelet transforms comprises:
performing a first Haar wavelet transform on the first initial component to obtain frequency bands after the first Haar wavelet transform; and
performing a second Haar wavelet transform on the frequency bands after the first Haar wavelet transform to obtain the frequency bands after the two Haar wavelet transforms; and
performing the two Haar wavelet transforms on the second initial component to obtain the frequency bands after the two Haar wavelet transforms comprises:
performing a first Haar wavelet transform on the second initial component to obtain frequency bands after the first Haar wavelet transform; and
performing a second Haar wavelet transform on the frequency bands after the first Haar wavelet transform to obtain the frequency bands after the two Haar wavelet transforms.

10. The method according to any one of claims 1-9, wherein performing feature enhancement on the adjusted component to obtain the restored target component corresponding to the second initial component comprises:
performing feature enhancement on the adjusted component by a plurality of residual block networks, to obtain the target component.

11. An encoding method, comprising:
encoding a first initial component and a second initial component of a current picture block, to obtain a bitstream corresponding to the current picture block, wherein a resolution of the first initial component is greater than or equal to a resolution of the second initial component.

12. The method according to claim 11, wherein the current picture block is in a YUV format, the first initial component is a luma component, and the second initial component is a chroma U component and a chroma V component.

13. A decoding device, comprising:
a decoding module, configured to decode a bitstream corresponding to a current picture block to obtain a reconstructed picture block, wherein the reconstructed picture block comprises a first initial component and a second initial component, wherein a resolution of the first initial component is greater than or equal to a resolution of the second initial component;
a determining module, configured to generate an adjusted component corresponding to the second initial component based on the first initial component and the second initial component; and
a processing module, configured to perform feature enhancement on the adjusted component, to obtain a restored target component corresponding to the second initial component.

14. An encoding device, comprising:
an encoding module, configured to encode a first initial component and a second initial component of a current picture block, to obtain a bitstream corresponding to the current picture block, wherein a resolution of the first initial component is greater than or equal to a resolution of the second initial component.

15. A decoding device, comprising: one or more processors and one or more machine-readable storage media, wherein the one or more machine-readable storage media store machine executable instructions that can be executed by the one or more processors; and
the one or more processors are configured to execute the machine executable instructions to implement the method according to any one of claims 1 to 10.

16. An encoding device, comprising: one or more processors and one or more machine-readable storage media, wherein the one or more machine-readable storage media store machine executable instructions that can be executed by the one or more processors; and
the one or more processors are configured to execute the machine executable instructions to implement the method according to any one of claims 11 to 12.

17. A machine-readable storage medium, wherein the machine-readable storage medium stores computer instructions, and one or more processors execute the computer instructions to implement the decoding method according to any one of claims 1-10, or the encoding method according to any one of claims 11-12.

18. A computer program product, comprising a computer program, wherein the computer program, when executed by one or more processors, implements the decoding method according to any one of claims 1-10, or implements the encoding method according to any one of claims 11-12.
